(19) Europäisches Patentamt
European Patent Office
Office européen des brevets

(11) **EP 4 089 629 A1**

(12) **EUROPEAN PATENT APPLICATION**
published in accordance with Art. 153(4) EPC

(43) Date of publication:
**16.11.2022 Bulletin 2022/46**

(21) Application number: **20912915.4**

(22) Date of filing: **08.01.2020**

(51) International Patent Classification (IPC):
***G06T 7/00*** *(2017.01)*

(52) Cooperative Patent Classification (CPC):
**G06T 7/00**

(86) International application number:
**PCT/JP2020/000298**

(87) International publication number:
**WO 2021/140590 (15.07.2021 Gazette 2021/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(54) **HUMAN DETECTION DEVICE, HUMAN DETECTION METHOD, AND RECORDING MEDIUM**

(71) Applicant: **NEC Corporation**
**108-8001 Tokyo (JP)**

(72) Inventor: **KAMIMURA, Junichi**
**Tokyo 108-8001 (JP)**

(74) Representative: **Betten & Resch**
**Patent- und Rechtsanwälte PartGmbB**
**Maximiliansplatz 14**
**80333 München (DE)**

(57)    The human body detection device estimates a head from an image, and outputs coordinates and a confidence level of the head rectangle including the head. Next, the human body detection device estimates and outputs a human body candidate area in which the human body corresponding to the head is predicted to exist based on the coordinates of the head rectangle. Then, the human body detection device estimates the human body rectangle including the human body based on the human body candidate area, and outputs coordinates and a confidence level of the human body rectangle.

FIG. 2

**Description**

TECHNICAL FIELD

The present invention relates to a technique for detecting a human body from an image.

BACKGROUND ART

Recently, there have been proposed many object detection techniques by a neural network using deep learning. Object detection is to estimate an object in an image or a moving image, and estimate the position and size of the object at the same time by determining a circumscribed rectangle of the object called a "bounding box". Therefore, the object detector outputs the position coordinates of the bounding box of the object, the category of the object, and the confidence level indicating the probability that the object belongs to that category.

An example of an object detection device is described in Non-Patent Document 1. The object detection device in this document is provided with a discriminator which outputs the bounding box position of the object candidate position and the confidence level indicating the likelihood of the object from the image, and a discriminator which outputs the bounding box position, the category of the object, and the confidence level for the category from the object candidate position obtained as described above.

In the field of object detection, human body detection is one of the most important tasks. For human body detection from moving images, various applications such as autonomous driving, security monitoring, and biometric authentication can be considered. Particularly in the real world, shielding problems such as overlapping of people with each other in a congested circumstance and partial concealment of human body by obstacles can be assumed, and robust human body detection for shielding is required. Patent Document 1 describes a method of calculating the distance between the face area and the human body area detected from an image and deleting the human body area as inappropriate when the face area and the human body area are in an actually impossible situation.

PRECEDING TECHNICAL REFERENCES

PATENT DOCUMENT

Patent Document 1: Japanese Patent Application Laid-Open under No. 2018-088049

NON-PATENT DOCUMENT

Non-Patent Document 1: Ren, Shaoqing, et al. "Faster r-cnn: Towards real-time object detection with area proposal networks". Advances in neural information processing systems, 2015.

SUMMARY

PROBLEM TO BE SOLVED

The method of Non-Patent Document 1 has such a problem that it is not possible to detect the human body with high accuracy in a scene where the object to be detected is shielded. Two cases are considered as shielding. One is the overlap between different categories. For example, there may be a situation where an obstacle such as a wall or a car overlaps with a pedestrian, and a part of the body cannot be seen. In this case, the visible area of the body becomes small, and the lack of information amount occurs, making it difficult to estimate the bounding box position of the whole body.

The other is the overlap of the same categories. For example, in a crowded situation of people such as a public facility or an event venue, overlapping of people occurs, and estimation of the bounding box position of the whole body becomes difficult by shielding. Also, in the object detection, when estimation result of multiple bounding boxes is obtained for the same object in the image, they are integrated to a single bounding box by the technique called NMS (Non Maximum Suppression). Therefore, even if the bounding box position can be estimated, the NMS processing determines actually different objects as the same object, and the bounding box of lower confidence level is rejected. Therefore, the object which has been correctly detected is rejected by the NMS processing, and becomes undetected.

It is one object of the present invention to provide a human body detection device which is robust to shielding.

MEANS FOR SOLVING THE PROBLEM

According to an example aspect of the present invention, there is provided a human body detection device comprising:

> a partial rectangle estimation unit configured to estimate a specific part of a human body from an image, and output coordinates and a confidence level of a partial rectangle including the part;
> a human body candidate area estimation unit configured to estimate and output a human body candidate area in which the human body corresponding to the part is predicted to exist, based on the coordinates of the partial rectangle; and
> a human body rectangle estimation unit configured to estimate a human body rectangle including the human body based on the human body candidate area, and output coordinates and a confidence level of the human body rectangle.

According to another example aspect of the present invention, there is provided a human body detection method comprising:

> estimating a specific part of a human body from an image, and outputting coordinates and a confidence level of a partial rectangle including the part;
> estimating and outputting a human body candidate area in which the human body corresponding to the part is predicted to exist, based on the coordinates of the partial rectangle; and
> estimating a human body rectangle including the human body based on the human body candidate area, and outputting coordinates and a confidence level of the human body rectangle.

According to another example aspect of the present invention, there is provided a recording medium recording a program, the program causing a computer to execute:

> estimating a specific part of a human body from an image, and outputting coordinates and a confidence level of a partial rectangle including the part;
> estimating and outputting a human body candidate area in which the human body corresponding to the part is predicted to exist, based on the coordinates of the partial rectangle; and
> estimating a human body rectangle including the human body based on the human body candidate area, and outputting coordinates and a confidence level of the human body rectangle.

According to another example aspect of the present invention, there is provided a human body detection device comprising:

> a first partial rectangle estimation unit configured to estimate a specific part of a human body from an image, and output coordinates and a confidence level of a first partial rectangle including the part;
> a first human body candidate area estimation unit configured to estimate and output a first human body candidate area in which the human body corresponding to the part is predicted to exist, based on the coordinates of the first partial rectangle;
> a first human body rectangle estimation unit configured to estimate a first human body rectangle including the human body based on the first human body candidate area, and output coordinates and a confidence level of the first human body rectangle;
> a second human body candidate area estimation unit configured to estimate a second human body candidate area from the image, and output the second human body candidate area;
> a second partial rectangle estimation unit configured to estimate the specific part corresponding to the human body based on the second human body candidate area, and output coordinates and a confidence level of a second partial rectangle including the part;
> a second human body rectangle estimation unit configured to estimate a second human body rectangle including the human body based on the second human body candidate area, and output coordinates and a confidence level of the second human body rectangle; and
> a human body integration unit configured to acquire the coordinates and the confidence level of the partial rectangle and the coordinates and the confidence level of the human body rectangle for a plurality of pairs of the partial rectangle and the human body rectangle corresponding to each other, and integrate the human body rectangles overlapping with each other based on an overlap ratio between the partial rectangles and an overlap ratio between the human body rectangles.

According to another example aspect of the present invention, there is provided a human body detection method comprising:

estimating a specific part of a human body from an image, and outputting coordinates and a confidence level of a first partial rectangle including the part;

estimating and outputting a first human body candidate area in which the human body corresponding to the part is predicted to exist, based on the coordinates of the first partial rectangle;

estimating a first human body rectangle including the human body based on the first human body candidate area, and outputting coordinates and a confidence level of the first human body rectangle;

estimating a second human body candidate area from the image, and outputting the second human body candidate area;

estimating the specific part corresponding to the human body based on the second human body candidate area, and outputting coordinates and a confidence level of a second partial rectangle including the part;

estimating a second human body rectangle including the human body based on the second human body candidate area, and outputting coordinates and a confidence level of the second human body rectangle; and

acquiring the coordinates and the confidence level of the partial rectangle and the coordinates and the confidence level of the human body rectangle for a plurality of pairs of the partial rectangle and the human body rectangle corresponding to each other, and integrating the human body rectangles overlapping with each other based on an overlap ratio between the partial rectangles and an overlap ratio between the human body rectangles.

According to another example aspect of the present invention, there is provided a recording medium recording a program, the program causing a computer to execute:

estimating a specific part of a human body from an image, and outputting coordinates and a confidence level of a first partial rectangle including the part;

estimating and outputting a first human body candidate area in which the human body corresponding to the part is predicted to exist, based on the coordinates of the first partial rectangle;

estimating a first human body rectangle including the human body based on the first human body candidate area, and outputting coordinates and a confidence level of the first human body rectangle;

estimating a second human body candidate area from the image, and outputting the second human body candidate area;

estimating the specific part corresponding to the human body based on the second human body candidate area, and outputting coordinates and a confidence level of a second partial rectangle including the part;

estimating a second human body rectangle including the human body based on the second human body candidate area, and outputting coordinates and a confidence level of the second human body rectangle; and

acquiring the coordinates and the confidence level of the partial rectangle and the coordinates and the confidence level of the human body rectangle for a plurality of pairs of the partial rectangle and the human body rectangle corresponding to each other, and integrating the human body rectangles overlapping with each other based on an overlap ratio between the partial rectangles and an overlap ratio between the human body rectangles.

According to another example aspect of the present invention, there is provided a human body detection device comprising:

a partial rectangle estimation unit configured to estimate a specific part of a human body from an image, and output coordinates and a confidence level of a partial rectangle including the part;

a human body center estimation unit configured to estimate a center position of the human body corresponding to the part estimated by the partial rectangle estimation unit;

a human body area estimation unit configured to estimate a human body area based on the coordinates of the partial rectangle and the center position of the human body;

a human body rectangle estimation unit configured to estimate a human body rectangle including the human body from the image, and output coordinates and a confidence level of the human body rectangle;

an integration candidate determination unit configured to determine, as the human body rectangle of integration candidate, the human body rectangle of the lower confidence level among the human body rectangles whose overlap ratio between the human body rectangles is larger than a third threshold; and

a human body rectangle integration unit configured to reject the human body rectangle other than the human body rectangle whose overlap ratio with the human body area is larger than a fourth threshold, among the human body rectangles of integration candidate.

According to another example aspect of the present invention, there is provided a human body detection method comprising:

estimating a specific part of a human body from an image, and outputting coordinates and a confidence level of a partial rectangle including the part;

estimating a center position of the human body corresponding to the part estimated;

estimating a human body area based on the coordinates of the partial rectangle and the center position of the human body;

estimating a human body rectangle including the human body from the image, and outputting coordinates and a confidence level of the human body rectangle;

determining, as the human body rectangle of integration candidate, the human body rectangle of the lower confidence level among the human body rectangles whose overlap ratio between the human body rectangles is larger than a third threshold; and

rejecting the human body rectangle other than the human body rectangle whose overlap ratio with the human body area is larger than a fourth threshold, among the human body rectangles of integration candidate.

According to another example aspect of the present invention, there is provided a recording medium recording a program, the program causing a computer to execute:

estimating a specific part of a human body from an image, and outputting coordinates and a confidence level of a partial rectangle including the part;

estimating a center position of the human body corresponding to the part estimated;

estimating a human body area based on the coordinates of the partial rectangle and the center position of the human body;

estimating a human body rectangle including the human body from the image, and outputting coordinates and a confidence level of the human body rectangle;

determining, as the human body rectangle of integration candidate, the human body rectangle of the lower confidence level among the human body rectangles whose overlap ratio between the human body rectangles is larger than a third threshold; and

rejecting the human body rectangle other than the human body rectangle whose overlap ratio with the human body area is larger than a fourth threshold, among the human body rectangles of integration candidate.

According to another example aspect of the present invention, there is provided a human body detection device comprising:

a partial rectangle estimation unit configured to estimate a specific part of a human body from an image, and output coordinates and a confidence level of a partial rectangle including the part;

a human body rectangle estimation unit configured to estimate a human body rectangle including a human body from the image, and output coordinates and a confidence level of the human body rectangle;

a threshold determination unit configured to determine a fifth threshold based on a number of the partial rectangles;

a threshold determination unit configured to determine a sixth threshold based on a human body area estimated from the partial rectangle;

a threshold determination unit configured to determine a seventh threshold between the fifth threshold and the sixth threshold using the fifth threshold and the sixth threshold; and

a human body rectangle integration unit configured to exclude the human body rectangle of the lower confidence level among the human body rectangles whose overlap ratio is larger than the seventh threshold.

According to another example aspect of the present invention, there is provided a human body detection method comprising:

estimating a specific part of a human body from an image, and outputting coordinates and a confidence level of a partial rectangle including the part;

estimating a human body rectangle including a human body from the image, and outputting coordinates and a confidence level of the human body rectangle;

determining a fifth threshold based on a number of the partial rectangles;

determining a sixth threshold based on a human body area estimated from the partial rectangle;

determining a seventh threshold between the fifth threshold and the sixth threshold using the fifth threshold and the sixth threshold; and

excluding the human body rectangle of the lower confidence level among the human body rectangles whose overlap ratio is larger than the seventh threshold.

According to another example aspect of the present invention, there is provided a recording medium recording a program, the program causing a computer to execute:

estimating a specific part of a human body from an image, and outputting coordinates and a confidence level of a partial rectangle including the part;

estimating a human body rectangle including a human body from the image, and outputting coordinates and a confidence level of the human body rectangle;

determining a fifth threshold based on a number of the partial rectangles;

determining a sixth threshold based on a human body area estimated from the partial rectangle;

determining a seventh threshold between the fifth threshold and the sixth threshold using the fifth threshold and the sixth threshold; and

excluding the human body rectangle of the lower confidence level among the human body rectangles whose overlap ratio is larger than the seventh threshold.

EFFECT

According to the present invention, it is possible to provide a human body detection device which is robust to shielding.

BRIEF DESCRIPTION OF THE DRAWINGS

FIG. 1 illustrates a hardware configuration of a human body detection device according to example embodiments.
FIG. 2 illustrates a functional configuration of a human body detection device according to a first example embodiment.
FIG. 3 illustrates examples of image feature values and anchor boxes.
FIG. 4 illustrates an example of a method for determining a human body candidate area.
FIG. 5 illustrates an example of a human body candidate area.
FIG. 6 is a flowchart of a human body detection processing according to the first example embodiment.
FIG. 7 illustrates a functional configuration of a human body detection device according to a second example embodiment.
FIG. 8 is a flowchart of a human body detection processing according to the second example embodiment.
FIGS. 9A and 9B are diagrams for explaining normal NMS and NMS of the example embodiments.
FIG. 10 illustrates a functional configuration of a human body detection device according to a third example embodiment.
FIG. 11 is a flowchart of a human body detection processing according to the third example embodiment.
FIG. 12 is a flowchart of a human body rectangle integration processing.
FIG. 13 illustrates a functional configuration of a human body detection device according to a fourth example embodiment.
FIG. 14 is a flowchart of a human body detection processing according to the fourth example embodiment.
FIG. 15 illustrates a functional configuration of a human body detection device according to a fifth example embodiment.
FIG. 16 is a flowchart of a human body detection processing according to the fifth example embodiment.
FIG. 17 illustrates a functional configuration of a human body detection device according to a sixth example embodiment.
FIG. 18 is a flowchart of a human body detection processing according to the sixth example embodiment.

EXAMPLE EMBODIMENTS

Preferred example embodiments of the present invention will be described with reference to the accompanying drawings.

[Basic Principle]

One of the problems that shielding poses in object detection is that it is difficult to directly estimate the entire object being shielded from the image. Therefore, among the points dependent on the object to be detected, the points for which shielding is unlikely to occur are estimated first, and the object to be detected is estimated only in the periphery thereof. For example, in the case of a human body, the head is an example of such points. In the real world, surveillance cameras and on-vehicle cameras are often installed at high positions, and the human head tends to be relatively difficult to shield (the head against the human body is called a "dependent category"). Therefore, in the example embodiments, first the dependent category is estimated, and a candidate area of the entire object is estimated at the peripheral area thereof. Then, after the estimation of the candidate area of the whole object, the object of interest is detected by performing processing only for that area.

The second problem is the integration processing by NMS. In the congested environment, the overlap between people is large, and rectangles estimated as different persons may be integrated into a single person by NMS. In order to solve this problem, in the example embodiments, the rectangle position information of the dependent category is used in the integration processing. Specifically, the integration processing is carried out considering the overlap between the dependent categories in addition to the overlap between the whole objects. This actually prevents different persons from being integrated into a single person by the integration processing.

[Hardware Configuration]

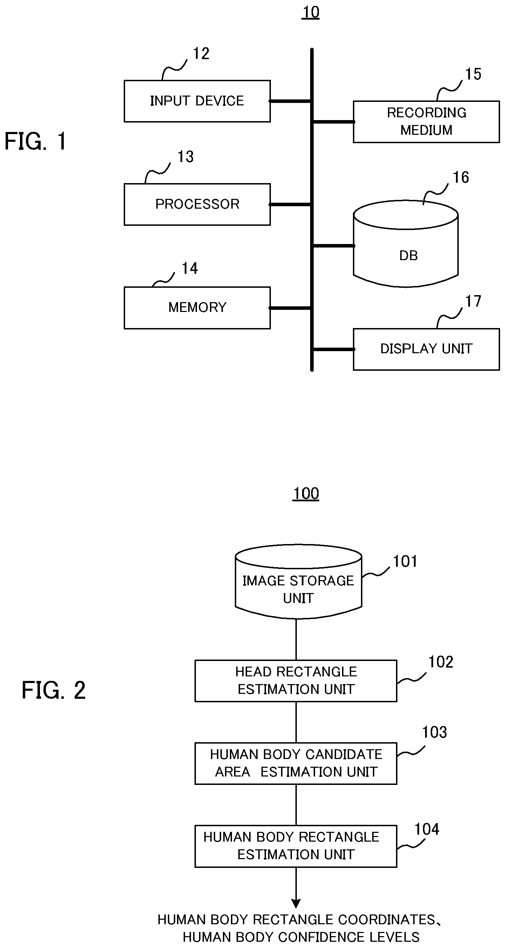

FIG. 1 is a block diagram illustrating a hardware configuration of a human body detection device according to example embodiments. As shown, the human body detection device 10 includes an input device 12, a processor 13, a memory 14, a recording medium 15, a database (DB) 16, and a display unit 17.

The input device 12 inputs image data used for learning or inference of the human body detection device 10. The image data may be a moving image or a still image. As the input device 12, for example, a digital camera, a smartphone with a camera, a vehicle-mounted camera or the like may be used.

The processor 13 is a computer such as a CPU (Central Processing Unit) or a GPU (Graphics Processing Unit), and controls the entire human body detection device 10 by executing a program prepared in advance. Specifically, the processor 13 executes the human body detection processing described later.

The memory 14 is composed of a ROM (Read Only Memory), a RAM (Random Access Memory), or the like. The memory 14 stores various programs to be executed by the processor 13. The memory 14 is also used as a work memory during the execution of various processing by the processor 13.

The recording medium 15 is a non-volatile and non-transitory recording medium such as a disk-shaped recording medium or a semiconductor memory, and is configured to be detachable from the human body detection device 10. The recording medium 15 records various programs to be executed by the processor 13. When the human body detection device 10 performs various processing, a program recorded on the recording medium 15 is loaded into the memory 14 and executed by the processor 13.

The database 16 stores the image data inputted from an external device including the input device 12. Specifically, the image data used for learning of the human body detection device 10 is stored. The display unit 17 is, for example, a liquid crystal display device or a projector, and displays a detection result by the human body detection device 10. In addition to the above, the human body detection device 10 may include an input device such as a keyboard or a mouse for the user to perform instructions or inputs.

[First example embodiment]

Next, a first example embodiment of the present invention will be described. The first example embodiment first estimates a person's head and then detects a human body based on the head.

(Functional configuration)

FIG. 2 is a block diagram illustrating a functional configuration of a human body detection device 100 according to a first example embodiment. The human body detection device 100 includes an image storage unit 101, a head rectangle estimation unit 102, a human body candidate area estimation unit 103, and a human body rectangle estimation unit 104.

The image storage unit 101 stores images inputted from the input device 12 and subjected to the image processing. The image may be a color image or a grayscale image. The size of the image is not limited.

The head rectangle estimation unit 102 receives an image from the image storage unit 101, calculates the image feature values, and outputs the coordinates (hereinafter referred to as "head rectangle coordinates") of the bounding boxes (hereinafter referred to as "rectangle") of the head and the confidence level (hereinafter referred to as "head confidence level") indicating the likelihood of head. The head rectangle estimation in the present example embodiment is not limited to a specific head rectangle estimation processing, and a matching method using a sliding window or a method using machine learning such as deep learning can be used, for example.

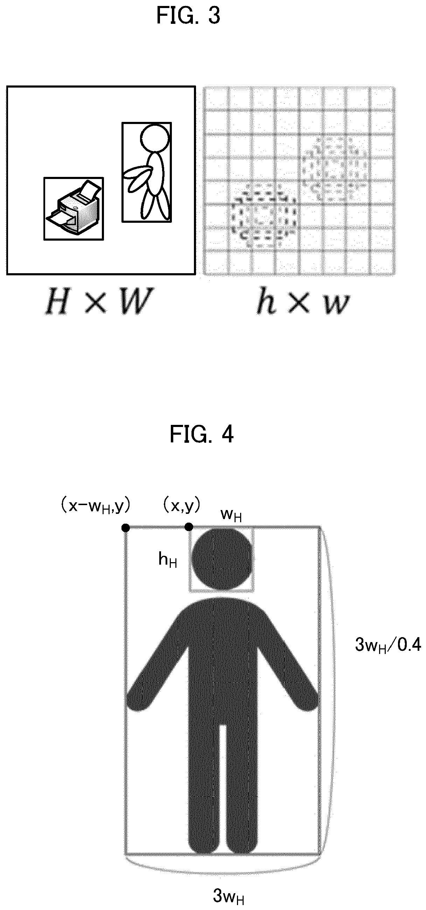

An example using machine learning will be described below. The head rectangle estimation unit 102 first extracts the image feature values using a neural network. Examples of the neural network include VGG and ResNet. The image inputted to the neural network is reduced in size by a plurality of convolution processes, and the image feature values are generated in the process. The image feature value is information of three dimensions. FIG. 3 shows examples of image feature values and an anchor boxes. Now, the size of the image feature value generated when an image having the image size of HxW is inputted is h×w×c. Here, "h" and "w" are the vertical and horizontal sizes of the image feature value, and "c" is the number of classes. The head rectangle estimation unit 102 estimates the positions of the head rectangles using the extracted image feature values and the anchor boxes. The anchor boxes are a group of rectangles of a predefined number having a predetermined aspect ratio, and a large number of anchor boxes are scattered in the image. Actually, a predetermined number of anchor boxes are arranged at each point in the spatial direction of the image feature value. The spatial size of the image feature value whose size is h×w×c is h×w. If four anchor boxes are arranged at each point, h×w×4 anchor boxes are arranged in total.

Next, the head rectangle estimation unit 102 outputs the head rectangle coordinates and the head confidence level using the image feature of each anchor box. The image feature of each anchor box is the information quantity of $1 \times 1 \times c$ on which the anchor box is located. The convolution processing is applied again to the information quantity of $1×1×c$, and the head rectangle coordinates and the head confidence level are estimated. The estimation here becomes possible by the neural network which learns rectangle position regression and category classification. Concretely, the head positions and the categories are given as correct answer data. The error of the correct answer data and the estimated results are computed by a loss function, and the neural network is corrected so that the error become small. This processing is repeated, and the learning ends when the number of repetition reaches a specified number of times. The head rectangle estimation unit 102 estimates the head rectangle coordinates and the head confidence levels from the image using the learned neural network thus obtained, and supplies the head rectangle coordinates and the head confidence levels to the human body candidate area estimation unit 103.

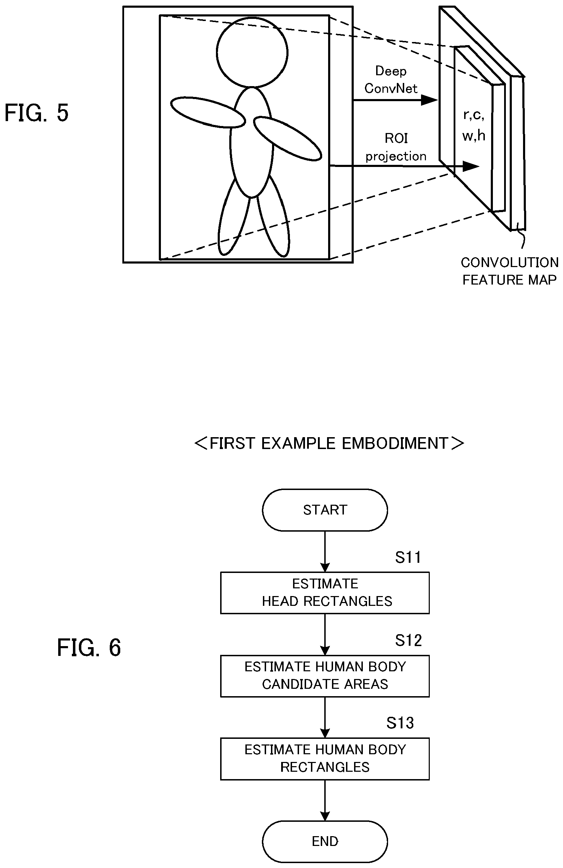

The human body candidate area estimation unit 103 receives the head rectangle coordinates and the head confidence levels from the head rectangle estimation unit 102 and estimates the human body candidate areas. "Human body candidate area" is the area in which the human body is predicted to exist in the image. Generally, for a detected head, a human body of the same person often exists in the image. Also, in view of the physical features of the human body, the area of the human body can be estimated to some extent on the basis of the position of the head. For example, there is a prior knowledge relating to the head that the body often exists below the neck. FIG. 4 shows an example of a method for determining a human body candidate area. In this example, a mechanical model is created based on the prior knowledge that the body exists below the head and the human body often forms a vertically long rectangle, and the human body candidate area is calculated from the head position. Specifically, in this example, the width of the human body is 3 times longer than the width of the head, and the height of the human body is 2.5 times longer than the width of the human body. Assuming that the head rectangle coordinates given by the head rectangle estimation unit 102 includes the coordinates (x, y) of the upper left point of the head rectangle and the width and height ($w_H$, $h_H$) of the head rectangle, the human body candidate area estimation unit 103 determines the coordinates of the upper left point of the human body candidate area as (x-$w_H$, y) and the width and height as ($3w_H$, $3w_H$/0.4). Then, as shown in FIG. 5, the human body candidate area estimation unit 103 cuts out the feature value corresponding to the human body candidate area from the feature value of the entire image and obtains the feature value of the human body candidate area.

The human body rectangle estimation unit 104 receives the human body candidate areas from the human body candidate area estimation unit 103, and outputs the coordinates of the human body rectangles (hereinafter referred to as "human body rectangle coordinates") and the confidence levels (hereinafter referred to as "human body confidence level") indicating the likelihood of the human body. The input of the human body rectangle estimation unit 104 is information obtained based on the human body candidate areas, which may be a portion of the image of the human body candidate area cut out from the image, or may be a portion of the feature value of the human body candidate area cut out from the image feature value. The human body rectangle estimation processing in the present example embodiment is not limited to a specific human body position estimation processing. Similarly to the head rectangle estimation unit 102, the human body rectangle estimation processing may be a matching method using a sliding window, a method using machine learning such as deep learning, and the like. Specifically, in the method using machine learning, the human body rectangle estimation unit 104 inputs the feature value extracted by the human body candidate area estimation unit 103 into the CNN (Convolutional Neural Network) and outputs the human body rectangle coordinates and the human body confidence level. This is done by making the neural network learn the regression of the human body candidate area and the category classification problem and estimating the human body rectangle coordinates and the human body confidence level using the learned neural network in the same way as the head rectangle estimation part 102.

(Human body detection processing)

Next, a human body detection processing according to the first example embodiment will be described. FIG. 6 is a flowchart of a human body detection processing according to the first example embodiment. This processing is implemented by the processor 13 shown in FIG. 1, which executes a program prepared in advance. First, the head rectangle estimation unit 102 receives the input image from the image storage unit 101 and estimates the head rectangles of the person present in the image (step S11). The head rectangle coordinates and the head confidence levels estimated by the head rectangle estimation unit 102 are sent to the human body candidate area estimation unit 103. Next, the human body candidate area estimation unit 103 estimates the human body candidate areas using the head rectangle coordinates obtained from the head rectangle estimation unit 102 (step S12). Then, the human body rectangle estimation unit 104 estimates the human body rectangles using the human body candidate areas obtained from the human body candidate area estimation unit 103, and outputs the human body rectangle coordinates and the human body confidence levels (step S13).

(Effects)

In the prior art, the candidate areas of the human body to be detected are estimated, and the positions of the human body rectangles are estimated using them. However, shielding by objects and/or people is apt to occur in congested situations. It is difficult to estimate the human body candidate area in the situation where the defect of the human body is caused by the shielding. In this regard, in the first example embodiment, rather than directly estimating the human body candidate area, the head part, which is a part where the shielding is unlikely to occur, is detected first and the human body candidate area is estimated from the head part. Therefore, it becomes more robust to the shielding than in the prior art, and it is possible to reduce the detection failure of the human body rectangle.

[Second example embodiment]

Next, a description will be given of a second example embodiment. In the first example embodiment, the head rectangle is estimated from the image, and the human body candidate area is estimated based on the position of the head rectangle. In contrast, in the second example embodiment, the center position of the human body is estimated in addition to the head rectangle, and the human body candidate area is estimated based on the position of the head rectangle and the center position of the human body.

(Functional configuration)

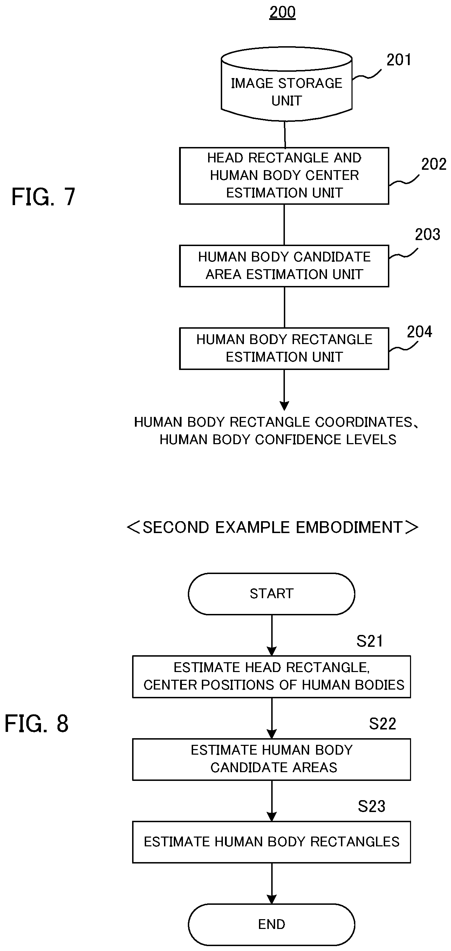

FIG. 7 is a block diagram illustrating a functional configuration of a human body detection device 200 according to the second example embodiment. The human body detection device 200 includes an image storage unit 201, a head rectangle and human body center estimation unit 202, a human body candidate area estimation unit 203, and a human body rectangle estimation unit 204. Incidentally, the hardware configuration of the human body detection device 200 of the second example embodiment is the same as that shown in FIG. 1.

The head rectangle and human body center estimation unit 202 receives an image from the image storage unit 201, calculates the image feature values, estimates the head rectangle coordinates and the head confidence levels, and estimates the center positions of the human bodies to which the heads belong. Here, the estimation processing of the head rectangle can be the same method as in the first example embodiment. Also, the estimation of the center position of the human body becomes possible by giving the center position of the human body as correct answer data, and by making the neural network learn the regression problem. Specifically, the information of the pair of the head rectangle and the human body rectangle for the same person is given as the correct answer data, and learning of the neural network is performed. Then, the image from the image storage unit 201 is inputted to the learned neural network to estimate the center position of the human body.

The human body candidate area estimation unit 203 receives the head rectangle coordinates, the head confidence levels, and the center positions of the human bodies to which the heads belong from the head rectangle and the human body center estimation unit 202, and estimates the human body candidate areas in which the human body of the person having the head is likely to exist. Specifically, assuming that the head rectangle coordinates given by the head rectangle and the human body center estimation unit 202 includes the width and the height ($w_H$, $h_H$) of the head rectangle, the human body candidate area estimation unit 203 estimates, as the human body candidate area, the rectangle having a width and a height ($3w_H$, $3w_H/0.4$) and having the center position of the human body received from the head rectangle and the human body center estimation unit 202 as the center. Then, the human body candidate area estimation unit 203 outputs the feature values of the human body candidate areas by cutting out the feature values corresponding to the human body candidate areas from the feature value of the entire image.

The human body rectangle estimation unit 204 is basically the same as the human body rectangle estimation unit 104 of the first example embodiment. The human body rectangle estimation unit 204 receives the human body candidate areas from the human body candidate area estimation unit 203, estimates the human body rectangles, and outputs the human body rectangle coordinates and the human body confidence levels.

(Human body detection processing)

Next, a human body detection processing according to a second example embodiment will be described. FIG. 8 is a flowchart of a human body detection processing according to the second example embodiment. This processing is implemented by the processor 13 shown in FIG. 1, which executes a program prepared in advance. First, the head rectangle and human body center estimation unit 202 receives the input image from the image storage unit 201 and estimates the head rectangles and the center positions of the human bodies present in the image (step S21). The head rectangle coordinates, the head confidence levels, and the center positions of the human bodies estimated by the head rectangle and human body center estimation unit 202 are sent to the human body candidate area estimation unit 203. Next, the human body candidate area estimation unit 203 estimates the human body candidate areas using the head rectangle coordinates and the center positions of the human bodies obtained from the head rectangle and the human body center estimation unit 202 (step S22). Then, the human body rectangle estimation unit 204 estimates the human body rectangles using the human body candidate areas obtained from the human body candidate area estimation unit 203 (step S23). Thus, the human body rectangle coordinates and the human body confidence levels estimated by the human body rectangle estimation unit 204 are outputted.

(Effects)

In the first example embodiment, since the human body candidate area is mechanically estimated, there is a possibility that the estimated human body candidate area deviates from the actual human body position. In this regard, in the second example embodiment, since the center position of the human body is determined by learning, it is robust against positional deviation of the human body.

[Third example embodiment]

Next, a description will be given of a third example embodiment. The third example embodiment performs processing for integrating a plurality of human body rectangles detected from an image. Many object detection techniques using deep learning use a reference rectangle called "anchor box" in learning and estimating rectangle positions of objects. The anchor boxes have various sizes and aspect ratios and are scattered innumerably in the image. When estimating the object position, the neural network obtains the image feature value for the area of each anchor box, and estimates the bounding box position and object category of the object. When learning the bounding box position and the object category of the objects, we calculate the deviation of the estimated bounding box position and the estimated object category from the bounding box position and the object category of the correct answer of the teacher data which has the largest overlap with the anchor box, and repeatedly adjust the neural network so that the deviation become small.

An object detector using the anchor box estimates the same number of objects as the number of anchor boxes set. That is, the position coordinates of the bounding box of the object, the category of that object, and the confidence level of that category are outputted the same number as the number of anchor boxes. Therefore, the estimation results of multiple bounding boxes may be obtained for the same object in the image, and it is necessary to integrate them into one. NMS is used as an integration method.

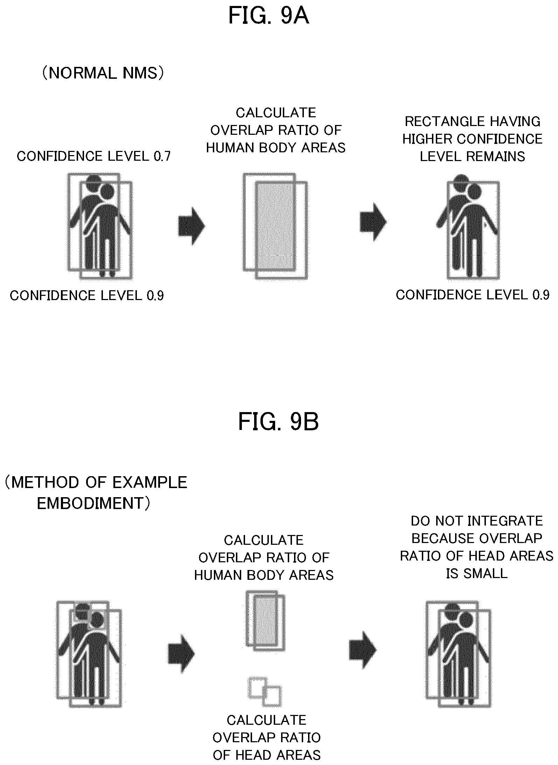

FIG. 9A schematically shows an example of normal NMS. The NMS calculates the overlap ratio of two bounding boxes indicating the human body area and rejects the bounding box with a lower confidence level out of the two only if the overlap ratio is larger than a set threshold (first threshold). In the example of FIG. 9A, two bounding boxes with confidence levels of 0.7 and 0.9 have been detected. The object detector calculates the overlap ratio of the two bounding boxes and compares it with a predetermined threshold. If the overlap ratio is larger than the threshold, the two bounding boxes are considered to be the detection results of the same object. Therefore, the object detector rejects the bounding box of lower confidence level (confidence level 0.7) and leaves the bounding box of higher confidence level (confidence level 0.9). By performing this processing for all the combinations of the bounding boxes of the same category, one bounding box is eventually determined for one object. In the following description, a threshold for a human body area or "a human body threshold" is an example of a first threshold. Also, a threshold for a head or "a head threshold" is an example of a second threshold.

However, for example, in a situation where people are crowded such as a public facility or an event venue, overlapping of people occurs, and it becomes difficult to estimate the bounding box position of the whole body due to the shielding. Therefore, the NMS processing may determine the objects actually different as the same object, and the bounding box of lower confidence level is rejected. As a result, the object once detected may be rejected by the NMS processing and becomes undetected.

Therefore, in the third example embodiment, the integration processing is performed in consideration of the overlap ratio of the bounding boxes indicating the head area, in addition to the overlap ratio of the bounding boxes indicating the human body area. FIG. 9B schematically shows an integration processing according to the third example embodiment. As illustrated, it is supposed that two bounding boxes indicating the human body area and two bounding boxes indicating their head are obtained. In this case, the human body detection device calculates the overlap ratio between the bounding boxes indicating the human body area (hereinafter referred to as the "human body overlap ratio") and compares the human body overlap ratio with a threshold for a predetermined human body area. In addition, the human body detection device calculates the overlap ratio between the bounding boxes indicating the head area (hereinafter referred to as the "head overlap ratio") and compares the head overlap ratio with a predetermined threshold for the head. When the human body overlap ratio is larger than the threshold for the human body area (the first threshold) and the head overlap ratio is larger than the threshold for the head (the second threshold), it is considered that the detected two persons are the same person. Therefore, the human body detection device rejects the bounding box whose confidence level of the human body area is lower. On the other hand, even if the human body overlap ratio is larger than the threshold for the human body area, if the head overlap ratio is smaller than the threshold for the head, it is considered that the human body areas are overlapped by the shielding and the detected two persons are different persons. Therefore, the human body detection device does not integrate those two bounding boxes. For example, in a scene where a person overlaps back and forth and the back person is showing the face above the front person's shoulder, the overlap between human body areas is large, but the overlap between the heads is small. Therefore, the human body detection device does not perform the integration. Thus, it becomes possible to correctly detect different persons even when the overlap of the human body is large due to congestion or the like.

(Functional configuration)

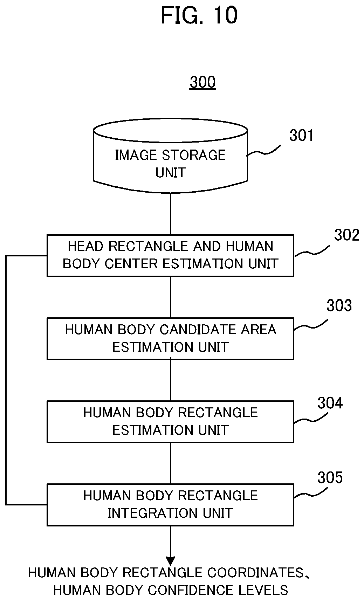

FIG. 10 is a block diagram illustrating a functional configuration of a human body detection device 300 according to the third example embodiment. The human body detection device 300 includes an image storage unit 301, a head rectangle and human body center estimation unit 302, a human body candidate area estimation unit 303, a human body rectangle estimation unit 304, and a human body rectangle integration unit 305. Incidentally, the hardware configuration of the human body detection device 300 of the third example embodiment is the same as that shown in FIG. 1.

In the third example embodiment, since the image storage unit 301, the head rectangle and human body center estimation unit 302, the human body candidate area estimation unit 303, and the human body rectangle estimation unit 304 are basically the same as the image storage unit 201, the head rectangle and human body center estimation unit 202, the human body candidate area estimation unit 203, and the human body rectangle estimation unit 204 of the second example embodiment, description thereof will be omitted.

The human body rectangle integration unit 305 performs the above-described integration processing. Specifically, the human body rectangle integration unit 305 acquires the head rectangle coordinates and the head confidence levels from the head rectangle and the human body center estimation unit 302, and acquires the human body rectangle coordinates and the human body confidence levels from the human body rectangle estimation unit 304. Then, as described with reference to FIG. 9B, the human body rectangle integration unit 305 rejects the human body rectangle having the lower confidence level only when the overlap ratios of both the human body rectangles and the head rectangles are larger than the thresholds. Then, the human body rectangle integration unit 305 outputs the human body rectangle coordinates and the human body confidence levels after the integration processing. This makes it possible to correctly detect different persons even when many parts of the human body are hidden by the shielding occurring on the image.

(Human body detection processing)

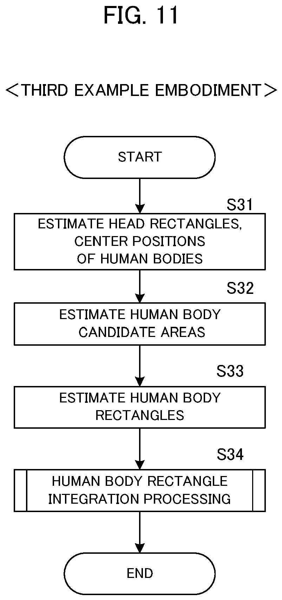

Next, a human body detection processing according to a third example embodiment will be described. FIG. 11 is a flowchart of a human body detection processing according to the third example embodiment. This processing is implemented by the processor 13 shown in FIG. 1, which executes a program prepared in advance. Since steps S31 to S33 in the third example embodiment are the same as steps S21 to S23 in the second example embodiment, description thereof is omitted.

When the human body rectangle is estimated in step S33, the human body rectangle integration unit 305 receives the head rectangles and the human body rectangles from the head rectangle and human body center estimation unit 302 and the human body rectangle estimation unit 304, respectively, and performs the human body rectangle integration processing so that plural estimation results are not generated for the same person (step S34). The head rectangles estimated by the head rectangle and the human body center estimation unit 302 and the human body rectangles estimated by the human body rectangle estimation unit 504 correspond to the same person and form a pair of one-to-one correspondence.

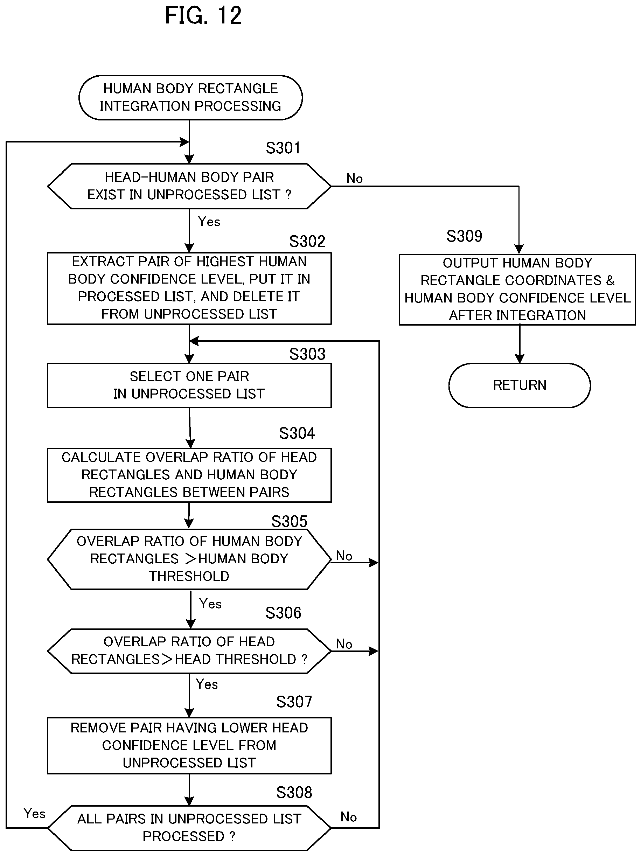

FIG. 12 shows a flowchart of a human body rectangle integration processing. The human body rectangle integration unit 305 receives a plurality of pairs of the estimated human body rectangle and the estimated head rectangle (hereinafter also referred to as "head-human body pairs") from the head rectangle and human body center estimation unit 302 and the human body rectangle estimation unit 504. The human body rectangle integration unit 305 first adds the head-human body pairs to the unprocessed list (step S301). Next, the human body rectangle integration unit 305 selects the pair having the highest human body confidence level from the unprocessed list, places it in the processed list, and deletes it from the unprocessed list (step S302).

Next, the human body rectangle integration unit 305 selects one pair in the unprocessed list (step S303), and calculates the overlap ratios of the head rectangles and the human body rectangles between the pair having the highest human body confidence level and the one pair selected in step S303 (step S304). An IoU (Intersection over Union) is used as an index for evaluating the overlap ratio. The IoU is given by the following equation. Now, if two rectangles are $box_1$, $box_2$, the higher the IoU, the larger the overlap between the two rectangles. Incidentally, the numerator of the following formula indicates the area of the overlapping portion of the two rectangles, the denominator indicates the area of the combined two rectangles.

[Formula 1]

$$IoU(box_1, box_2) = \frac{box_1 \cap box_2}{box_1 \cup box_2}$$

Next, the human body rectangle integration unit 305 determines whether or not the overlap ratio of the human body rectangles is larger than the predetermined threshold for the human body rectangle (step S305). When the overlap ratio of the human body rectangles is larger than the predetermined first threshold for the human body rectangle (described as a "human body threshold" in FIG. 12) (step S305: Yes), the human body rectangle integration unit 305 determines whether or not the overlap ratio of the head rectangles is larger than a predetermined threshold for the head (step S306). When the overlap ratio of the head rectangles is larger than the predetermined second threshold for the head (described as the "head threshold" in FIG. 12) (step S306: Yes), since the head and human body pair is considered to be the estimation result of the same person, the human body rectangle integration unit 305 removes the pair having the lower head confidence level from the unprocessed list (step S307). Incidentally, the reason for determining the pairs to be removed based on the head confidence level is that the head confidence level is considered to be more reliable than the human body confidence level in an environment where a part of the human body is shielded. When the overlap ratio of the human body rectangles is equal to or smaller than the threshold for the human body rectangle (step S305: No), and when the overlap ratio of the head rectangles is equal to or smaller than the threshold for the head (step S306: No), the processing returns to step S303 and performs processing for another pair in the unprocessed list.

Next, the human body rectangle integration unit 305 determines whether or not all the pairs in the unprocessed list have been processed (step S308). If all pairs have not been processed (step S308: No), the processing returns to step S303 and the processing of step S303 to S307 is performed for another pair in the unprocessed list. On the other hand, if all the pairs in the unprocessed list have been processed (step S308: Yes), the processing returns to step S301. Then, when the integration processing is performed for all the pairs in the unprocessed list (step S301: No), the human body rectangle integration unit 305 outputs the human body rectangle coordinates and the human body confidence level after the integration (step S309). Then, the processing ends.

(Effects)

In the prior art, since only the information of the human body rectangles is used to evaluate the overlap of the human body rectangles, in a congested environment where the people overlap with each other, the rectangles of the persons largely overlapping with each other are integrated. In this regard, in the third example embodiment, since the integration processing is performed in consideration of the overlap ratio of not only the human body rectangles but also the head rectangles, it is possible to prevent the different persons from being integrated.

[Fourth example embodiment]

Next, a description will be given of a fourth example embodiment. The fourth example embodiment integrates a plurality of human body rectangles detected from an image in the same manner as in the third example embodiment. However, in the third example embodiment, since the human body candidate area is estimated based on the head rectangle estimated from the image, when the head cannot be detected from the image, the human body cannot be detected. In this view, in the fourth example embodiment, the human body candidate area estimated directly from the image is used in combination with the human body candidate area determined based on the estimation result of the head rectangle. As a result, a larger number of human body candidate areas can be detected as compared with the third example embodiment.

(Functional configuration)

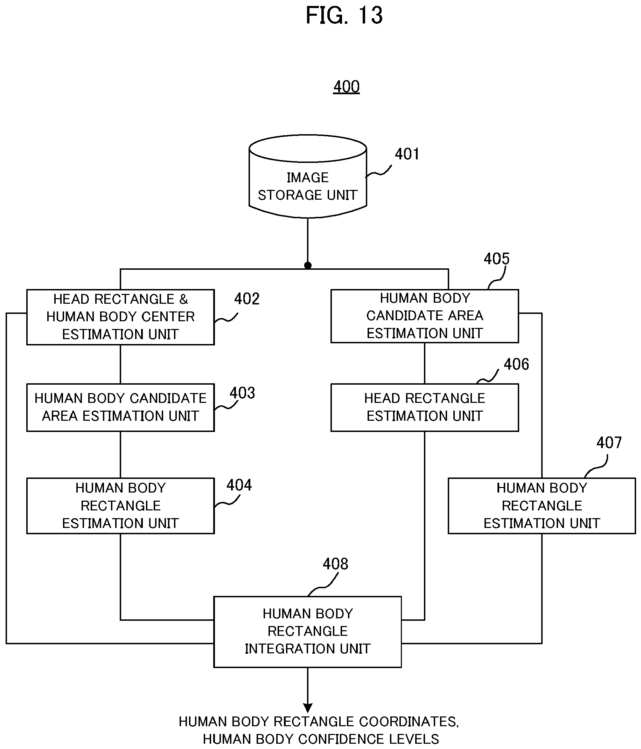

FIG. 13 is a block diagram illustrating a functional configuration of a human body detection device 400 according to the fourth example embodiment. The human body detection device 400 includes an image storage unit 401, a head rectangle and human body center estimation unit 402, a human body candidate area estimation unit 403, a human body rectangle estimation unit 404, a human body candidate area estimation unit 405, a head rectangle estimation unit 406, a human body rectangle estimation unit 407, and a human body rectangle integration unit 408. Incidentally, the hardware configuration of the human body detection device 400 of the fourth example embodiment is the same as that shown in FIG. 1.

The image storage unit 401 stores images subjected to the image processing in the present example embodiment. The head rectangle and human body center estimation unit 402 receives an image from the image storage unit 401, calculates the image feature values, and outputs the head rectangle coordinates, the head confidence levels, and the center positions of the human bodies to which the heads belong to the human body candidate area estimation unit 403. The head rectangle and human body center estimation unit 402 also outputs the estimated head rectangle coordinates and the head confidence levels to the human body rectangle integration unit 408.

Based on the head rectangle coordinates, the head confidence levels, and the center positions of the human bodies received from the head rectangle and human body center estimation unit 402, the human body candidate area estimation unit 403 outputs human body candidate areas in which the human body of the person having the head is predicted to exist. The human body rectangle estimation unit 404 estimates the human body rectangles based on the human body candidate areas outputted by the human body candidate area estimation unit 403 and outputs the human body rectangle coordinates and the human body confidence levels to the human body rectangle integration unit 408. Thus, the head rectangle coordinates and the head confidence levels are inputted from the head rectangle and the human body center estimation unit 402 to the human body rectangle integration unit 408, and the human body rectangle coordinates and the human body rectangle confidence levels are inputted from the human body rectangle estimation unit 404 to the human body rectangle integration unit 408. That is, the head is first estimated from the image, and the head-human body pair estimated based on the head is inputted to the human body rectangle integration unit 408.

Meanwhile, the human body candidate area estimation unit 405 receives the image from the image storage unit 401, calculates the image feature values, and estimates the human body candidate areas and the center positions of the heads belonging to the human bodies. Then, the human body candidate area estimation unit 405 inputs the human body candidate areas and the center positions of the heads to the head rectangle estimation unit 406 and inputs the human body candidate areas to the human body rectangle estimation unit 407.

The head rectangle estimation unit 406 estimates the head rectangle coordinates and the head confidence levels based on the human body candidate areas and the center positions of the heads belonging to the human bodies, and outputs the estimated head rectangle coordinates and the estimated head confidence levels to the human body rectangle integration unit 408. Since the human body candidate areas directly estimated from the image by the human body candidate area estimation unit 405 does not have a paired head rectangle, it is necessary to estimate the head rectangles from the human body candidate areas. Therefore, the head rectangle estimation unit 406 generates head rectangles from the center coordinates of the heads obtained from the human body candidate area estimation unit 405. Incidentally, a model of any type may be used to generate the head rectangle. For example, a square having a width of 1/3 of the width of the human body candidate area may be generated as the head rectangle.

The human body rectangle estimation unit 407 receives the human body candidate areas from the human body candidate area estimation unit 405, estimates the human body rectangle coordinates and the human body confidence levels, and outputs them to the human body rectangle integration unit 408. Thus, the head rectangle coordinates and the head confidence levels are inputted from the head rectangle estimation unit 406 to the human body rectangle integration unit 408, and the human body rectangle coordinates and the human body rectangle confidence levels are inputted from the human body rectangle estimation unit 407 to the human body rectangle integration unit 408. That is, the human body is directly estimated from the image, and the head-human body pair obtained based on the human body is inputted to the human body rectangle integration unit 408.

The human body rectangle integration unit 408 performs the same integration processing as that of the third example embodiment using the head-human body pairs obtained by first estimating the head from the image and the head-human body pairs obtained by estimating the human body from the image as described above, and outputs the human body rectangle coordinates and the human body confidence levels.

(Human body detection processing)

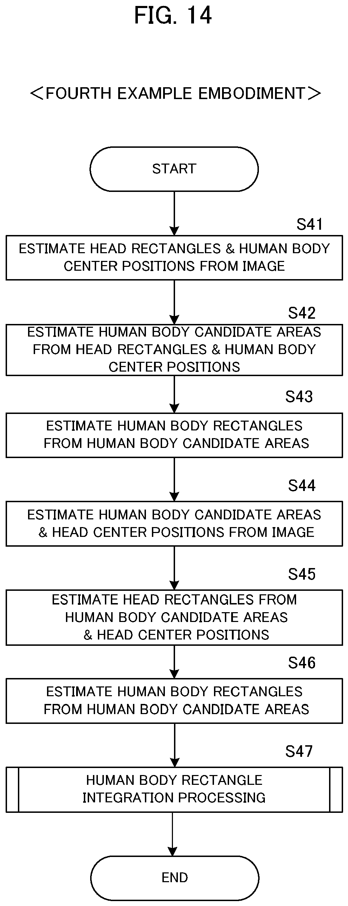

Next, a human body detection processing according to the fourth example embodiment will be described. FIG. 14 is a flowchart of a human body detection processing according to the fourth example embodiment. This processing is implemented by the processor 13 shown in FIG. 1, which executes a program prepared in advance. First, the head rectangle and human body center estimation unit 402 estimates the head rectangles from the image stored in the image storage unit 401, and outputs the head rectangle coordinates, the head confidence levels, and the center positions of the human bodies (step S41). The human body candidate area estimation unit 403 estimates the human body candidate areas from the head rectangle coordinates and the center positions of the human bodies (step S42). The human body rectangle estimation unit 404 estimates the human body rectangle coordinates and the human body confidence levels from the human body candidate areas (step S43).

Further, the human body candidate area estimation unit 405 estimates the human body candidate areas and the center positions of the heads from the image stored in the image storage unit 401 (step S44). The head rectangle estimation unit 406 estimates the head rectangles from the human body candidate areas and the center positions of the heads (step S45). The human body rectangle estimation unit 407 estimates the human body rectangles from the human body candidate areas (step S46). The order of steps S41 to S43 and steps S44 to S46 may be reversed, and both may be performed in parallel.

Then, the human body rectangle integration unit 408 performs the integration processing of the human body rectangles for the pairs of the head rectangle obtained in step S41 and the human body rectangle obtained in step S43, and the pairs of the head rectangle obtained in step S45 and the human body rectangle obtained in step S46 (step S47). Incidentally, the integration processing itself is the same as that of the third example embodiment.

(Effects)

In the third example embodiment, since the human body candidate area is estimated from the head rectangle, when the head cannot be detected, the human body cannot be detected. In this regard, in the fourth example embodiment, since the human body candidate area estimated directly from the image is used in combination with the human body candidate area obtained from the estimation result of the head rectangle, it becomes possible to reduce the possibility that the human body is not detected, in comparison with the third example embodiment.

[Fifth example embodiment]

Next, a description will be given of a fifth example embodiment. In the third example embodiment and the fourth example embodiment, in order to perform the human body rectangle integration processing, it is necessary to prepare a pair of correct answer data of the human body and the head of the same person in the course of learning. In contrast, the fifth example embodiment facilitates the preparation of learning data by estimating the human body and the head independently.

(Functional configuration)

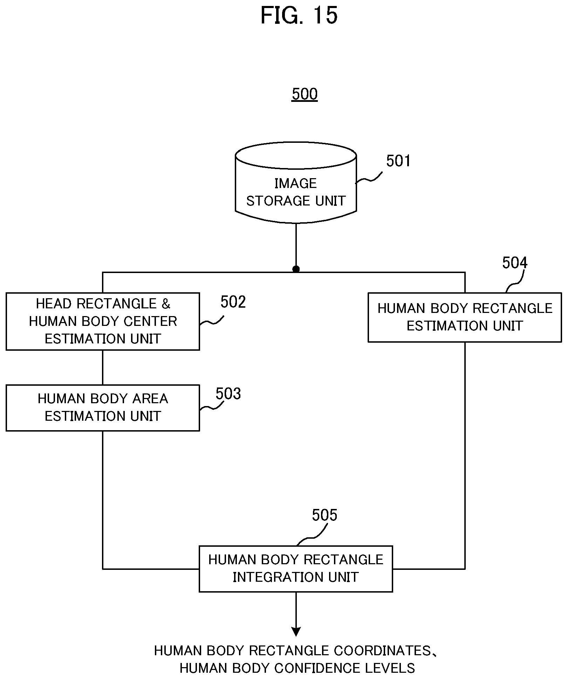

FIG. 15 is a block diagram illustrating a functional configuration of a human body detection device 500 according to a fifth example embodiment. The human body detection device 500 includes an image storage unit 501, a head rectangle and human body center estimation unit 502, a human body area estimation unit 503, a human body rectangle estimation unit 504, and a human body rectangle integration unit 505. Incidentally, the hardware configuration of the human body detection device 500 of the fifth example embodiment is the same as that shown in FIG. 1.

The image storage unit 501 stores images subjected to the image processing in the present example embodiment. The head rectangle and human body center estimation unit 502 receives an image from the image storage unit 501, calculates the image feature values, and outputs the head rectangle coordinates, the head confidence levels, and the center positions of the human bodies to which the heads belong to the human body area estimation unit 503. Based on the head rectangle coordinates, the head confidence levels, and the center positions of the human bodies received from the head rectangle and the human body center estimation unit 502, the human body area estimation unit 503 estimates the human body areas in which the human body of the person having the head is predicted to exist as a rectangle and outputs them to the human body rectangle integration unit 505. On the other hand, the human body rectangle estimation unit 504 receives the image from the image storage unit 501, calculates the image feature values, estimates the human body rectangle coordinates and the human body confidence levels, and outputs them to the human body rectangle integration unit 505.

The human body rectangle integration unit 505 performs the integration processing using the human body areas outputted by the human body area estimation unit 503 and the human body rectangles and the human body confidence levels outputted by the human body rectangle estimation unit 504. Specifically, the human body rectangle integration unit 505 first performs the integration processing using the normal NMS shown in FIG. 9A for the human body rectangles inputted from the human body rectangle estimation unit 504, and determines the human body rectangle having lower confidence level as an integration candidate for the human body rectangles for which the overlap ratio thereof is larger than the threshold (the third threshold). Next, among the human body rectangles determined as the integration candidates, the human body rectangle integration unit 505 does not reject the human body rectangle having a large overlap ratio with the human body area generated by the human body area estimation unit 503, and rejects the human body rectangle having a small overlap ratio with the human body area generated by the human body area estimation unit 503. Then, the human body rectangle integration unit 505 outputs the human body rectangle coordinates and the human body confidence levels of the remaining human body rectangles. In the following description in this example embodiment, the threshold is an example of a third threshold. The third threshold may be different from the first threshold and the second threshold in the third example embodiment.

(Human body detection processing)

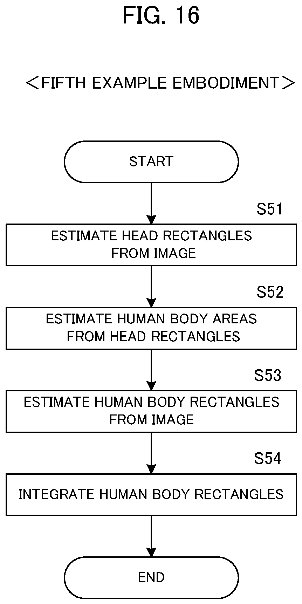

Next, a human body detection processing according to the fifth example embodiment will be described. FIG. 16 is a flowchart of the human body detection processing according to the fifth example embodiment. This processing is implemented by the processor 13 shown in FIG. 1, which executes a program prepared in advance. First, the head rectangle and human body center estimation unit 502 estimates the head rectangles from the image stored in the image storage unit 501, and outputs the head rectangle coordinates, the head confidence levels, and the center positions of the human bodies (step S51). The human body area estimation unit 503 estimates the human body areas from the head rectangle coordinates and the center positions of the human bodies (step S52). The human body rectangle estimation unit 504 estimates the human body rectangles from the image stored in the image storage unit 501, and estimates the human body rectangle coordinates and the human body confidence levels (step S53). Then, the human body rectangle integration unit 505 performs the integration processing by the above-described method using the human body areas inputted from the human body area estimation unit 503 and the human body rectangles and the human body confidence levels inputted from the human body rectangle estimation unit 504, and outputs the human body rectangle coordinates and the human body confidence levels for the human body rectangles after integration (step S54). Then, the processing ends.

(Effects)

In the fourth example embodiment, in the course of learning, a pair of correct answer data of the human body and the head of the same person was required. In this regard, in the present example embodiment, since the learning data of the human body and the head may be prepared individually, the preparation of the learning data is facilitated.

[Sixth example embodiment]

Next, a description will be given of a sixth example embodiment. In the third to fifth example embodiments described above, the overlap ratio of the human body rectangles indicated by the IoU value is compared with the threshold in the integration processing (NMS) of the human body rectangles, and a fixed value is used as the threshold for different images. However, when the threshold is set to a fixed value, detection failure or erroneous detection may occur depending on the image. Therefore, in the sixth example embodiment, the threshold is dynamically determined for each image. It is noted that the threshold to be compared with the IoU value in the integration processing will be hereinafter referred to as "the IoU threshold". Basically, as the IoU threshold is set to a higher value, the number of outputted rectangles increases and the erroneous detection increases. Also, as the IoU threshold is set to a lower value, the number of outputted rectangles decreases and the detection failure increases. Incidentally, when the IoU threshold is set to "1", the number of human body rectangles excluded by the integration processing becomes "0".

Specifically, the sixth example embodiment estimates the number of persons and the overlap degree of persons (the degree of congestion) in the target image using the information of the head rectangles, and determines the IoU threshold for each image. First, the estimation of the number of persons will be described. As mentioned earlier, even when the overlap degree of human bodies is large in a congested situation, the overlap degree of heads is relatively small. Therefore, the NMS processing is performed for the head rectangle estimated from the image, and the number of the head rectangles obtained is assumed to be the number of persons included in the image. Then, the integration processing is performed while decreasing the IoU threshold from "1", and the IoU threshold at the time when the number of the outputted human body rectangles matches the number of persons included in the image, i.e., the estimated number of the head rectangles, is set as the first IoU threshold. The first IoU threshold in this example embodiment corresponds to the upper limit in the appropriate range of the IoU threshold and corresponds to the fifth threshold.

Next, estimation of the overlap degree of persons will be described. The overlap degree of the persons included in the image differs for each image. Therefore, the human body areas are estimated from the head rectangles included in the image, and the IoU value when the overlap degree of the estimated human body areas is the largest is set as the second IoU threshold. Since the accuracy of the human body area estimated from the head rectangle is relatively high, it is considered that the above second IoU threshold corresponds to the maximum overlap degree in that image. Therefore, when the IoU value of two human body rectangles is higher than the second IoU value in the integration processing, it is considered that the two human body rectangles should be integrated as the same person. From this point, the second IoU threshold in this example embodiment corresponds to the lower limit in the appropriate range of the appropriate IoU threshold and corresponds to the sixth threshold.

Then, the value between the first IoU threshold and the second IoU threshold is determined as the third IoU threshold suitable for the image. Incidentally, the third IoU threshold in this example embodiment corresponds to the seventh threshold. As described above, in the sixth example embodiment, the third IoU threshold is determined for each image, and the integration processing of the human body rectangles is performed using the third IoU threshold.

(Functional configuration)

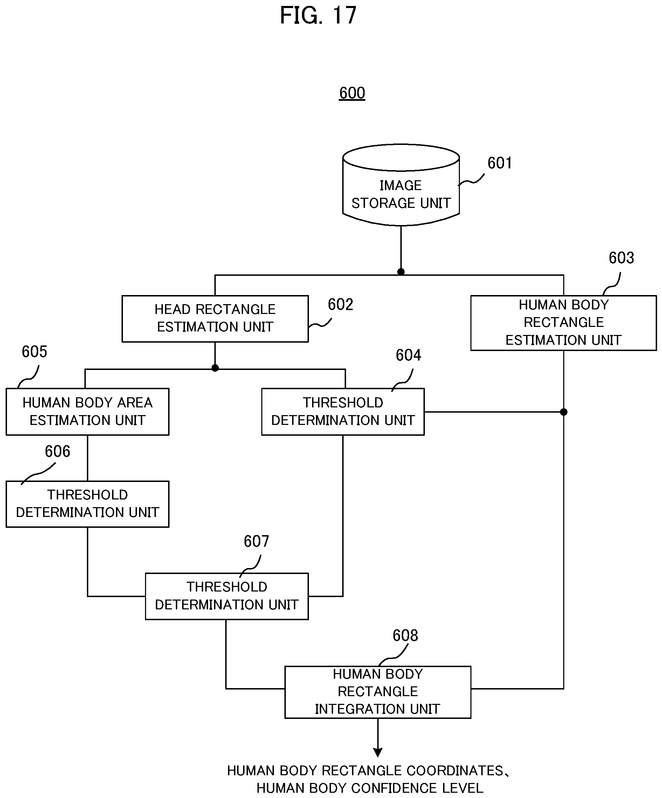

FIG. 17 is a block diagram illustrating a functional configuration of a human body detection device 600 according to the sixth example embodiment. The human body detection device 600 includes an image storage unit 601, a head rectangle estimation unit 602, a human body rectangle estimation unit 603, a threshold determination unit 604, a human body area estimation unit 605, threshold determination units 606 and 607, and a human body rectangle integration unit 608. Incidentally, the hardware configuration of the human body detection device 600 of the sixth example embodiment is the same as that shown in FIG. 1.

The image storage unit 601 stores images subject to the image processing. The head rectangle estimation unit 602 receives an image from the image storage unit 601, calculates the image feature values, and outputs the head rectangle coordinates and the head confidence levels to the threshold determination unit 604 and the human body area estimation unit 605. The human body rectangle estimation unit 603 receives the image from the image storage unit 601, calculates the image feature values, estimates the human body rectangle coordinates and the human body confidence levels, and outputs them to the threshold determination unit 604 and the human body rectangle integration unit 608.

The threshold determination unit 604 determines the first IoU threshold using the head rectangles received from the head rectangle estimation unit 602 and the human body rectangles received from the human body rectangle estimation unit 603. It is noted that the correspondence for the same person has not been ensured for the head rectangles and the human body rectangles thus received. First, the threshold determination unit 604 performs the NMS processing on the received head rectangles to determine the head rectangles. This NMS processing is the normal NMS processing shown in FIG. 9A, whose IoU threshold is a fixed value, and generally a value of 0.5 to 0.7 is used. Then, the threshold determination unit 604 assumes the number of the head rectangles obtained by the NMS processing as the number of the human body rectangles. Next, the threshold determination unit 604 performs the NMS processing on the received human body rectangles. At this time, the threshold determination unit 604 lowers the IoU threshold from "1" to "0" and determines the IoU threshold when the number of the human body rectangles outputted by the NMS processing matches the number of the head rectangles obtained earlier as the first IoU threshold. Then, the threshold determination unit 604 outputs the first IoU threshold to the threshold determination unit 607.

The human body area estimation unit 605 estimates the human body areas in which the human body of the person having the head is predicted to exist as the rectangles using the head rectangle coordinates and the head confidence levels received from the head rectangle estimation unit 602, and outputs them to the threshold determination unit 606. Incidentally, as described above, a mechanical generation model or a model using machine learning may be used for generating the human body area. The threshold determination unit 606 determines the IoU value between the human body areas having the largest overlap among the inputted human body areas as the second IoU threshold. Then, the threshold determination unit 606 outputs the second IoU threshold to the threshold determination unit 607.

The threshold determination unit 607 determines the third IoU threshold using the first IoU threshold and the second IoU threshold. Here, the threshold determination unit 607 determines a value that is within the range of the first IoU threshold and the second IoU threshold as the third IoU threshold. For example, the third IoU threshold may be an intermediate value between the first IoU threshold and the second IoU threshold, or may be a value close to either. The threshold determination unit 607 outputs the determined third IoU threshold to the human body rectangle integration unit 608.

The human body rectangle integration unit 608 performs the integration processing of the human body rectangles outputted by the human body rectangle estimation unit 603 using the third IoU threshold determined by the threshold determination unit 607. Specifically, the human body rectangle integration unit 608 performs the integration processing on the human body rectangles outputted by the human body rectangle estimation unit 603, and excludes the human body rectangle having a lower confidence level for the human body rectangles having the overlap ratio larger than the third IoU threshold. Then, the human body rectangle integration unit 608 outputs the human body rectangle coordinates and the human body confidence levels of the human body rectangles remaining after the integration processing.

(Human body detection processing)

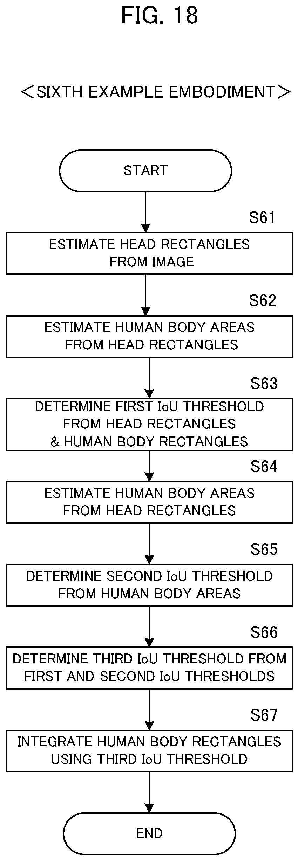

Next, a human body detection processing according to a sixth example embodiment will be described. FIG. 18 is a flowchart of a human body detection processing according to a fifth example embodiment. This processing is implemented by the processor 13 shown in FIG. 1, which executes a program prepared in advance. First, the head rectangle estimation unit 602 estimates the head rectangles from the image stored in the image storage unit 601, and outputs the head rectangle coordinates and the head confidence levels (step S61). The human body rectangle estimation unit 603 estimates the human body rectangles from the image stored in the image storage unit 601, and estimates the human body rectangle coordinates and the human body confidence levels (step S62). The steps S61 and S62 may be executed in the reversed order, or may be performed in parallel. Next, the threshold determination unit 604 determines the first IoU threshold from the head rectangles and the human body rectangles (step S63). The first IoU threshold shown in FIG. 18 is an example of a fifth threshold.

Next, the human body area estimation unit 605 estimates the human body areas from the head rectangle coordinates (step S64). Next, the threshold determination unit 606 determines the second IoU threshold from the human body areas (step S65). The second IoU threshold shown in FIG. 18 is an example of a sixth threshold. Next, the threshold determination unit 607 determines the third IoU threshold using the first IoU threshold and the second IoU threshold (step S66). The third IoU threshold shown in FIG. 18 is an example of a seventh threshold. Then, the human body rectangle integration unit 608 performs the integration processing of the human body rectangles estimated by the human body rectangle estimation unit 603 using the third IoU threshold determined by the threshold determination unit 607, and outputs the human body rectangle coordinates and the human body confidence levels for the human body rectangles after the integration (step S67). Then, the processing ends.

(Effects)

In the integration processing of the human body rectangles in the third to fifth example embodiments described above, a fixed value is used as the IoU threshold, and the fixed value needs to be determined manually by a person. However, in the image taken in the real environment, the human congestion degree varies, and it is not preferable to fix the IoU threshold used for the integration processing of the human body rectangles. In this regard, in the sixth example embodiment, since the congestion degree (the number of persons or the overlap degree of the human bodies) is estimated using the head for each image and the IoU threshold that matches the scene is used, it is possible to reduce detection failure or erroneous detection.

[Modification]

While the human body and the head are used in the above example embodiments, a specific part of the human body other than the head may be used. For example, a foot may be used as a specific part of the human body. Also, the present invention can be applied to categories that are positionally related, such as a vehicle and a tire, or a face and a mouth.

A part or all of the example embodiments described above may also be described as the following supplementary notes, but not limited thereto.

(Supplementary note 1)

A human body detection device comprising:

a partial rectangle estimation unit configured to estimate a specific part of a human body from an image, and output coordinates and a confidence level of a partial rectangle including the part;
a human body candidate area estimation unit configured to estimate and output a human body candidate area in which the human body corresponding to the part is predicted to exist, based on the coordinates of the partial rectangle; and
a human body rectangle estimation unit configured to estimate a human body rectangle including the human body based on the human body candidate area, and output coordinates and a confidence level of the human body rectangle.

(Supplementary note 2)

The human body detection device according to Supplementary note 1, further comprising a human body center estimation unit configured to estimate a center position of the human body corresponding to the part estimated by the partial rectangle estimation unit,

wherein the human body candidate area estimation unit estimates the human body candidate area based on the coordinates of the partial rectangle and the center position of the human body.

(Supplementary note 3)

The human body detection device according to Supplementary note 2, wherein the human body candidate area estimation unit estimates, as the human body candidate area, a rectangle area of a predetermined aspect ratio including the center position of the human body as its center.

(Supplementary note 4)

The human body detection device according to any one of Supplementary notes 1 to 3, further comprising a human body integration unit configured to acquire the coordinates and the confidence level of the partial rectangle and the coordinates and the confidence level of the human body rectangle for a plurality of pairs of the partial rectangle and the human body rectangle corresponding to each other, and integrate the human body rectangles overlapping with each other based on an overlap ratio between the partial rectangles and an overlap ratio between the human body rectangles.

(Supplementary note 5)

The human body detection device according to Supplementary note 4, wherein, when the overlap ratio between the human body rectangles is larger than a first threshold and the overlap ratio of the partial rectangles is larger than a second threshold, the human body integration unit excludes the human body rectangle for which the confidence level of the partial rectangle is lower.

(Supplementary note 6)

A human body detection method comprising:

estimating a specific part of a human body from an image, and outputting coordinates and a confidence level of a partial rectangle including the part;
estimating and outputting a human body candidate area in which the human body corresponding to the part is predicted to exist, based on the coordinates of the partial rectangle; and
estimating a human body rectangle including the human body based on the human body candidate area, and outputting coordinates and a confidence level of the human body rectangle.

(Supplementary note 7)

A recording medium recording a program, the program causing a computer to execute:

estimating a specific part of a human body from an image, and outputting coordinates and a confidence level of a partial rectangle including the part;
estimating and outputting a human body candidate area in which the human body corresponding to the part is predicted to exist, based on the coordinates of the partial rectangle; and
estimating a human body rectangle including the human body based on the human body candidate area, and outputting coordinates and a confidence level of the human body rectangle.

(Supplementary note 8)

A human body detection device comprising:

a first partial rectangle estimation unit configured to estimate a specific part of a human body from an image, and output coordinates and a confidence level of a first partial rectangle including the part;
a first human body candidate area estimation unit configured to estimate and output a first human body candidate area in which the human body corresponding to the part is predicted to exist, based on the coordinates of the first partial rectangle;
a first human body rectangle estimation unit configured to estimate a first human body rectangle including the human body based on the first human body candidate area, and output coordinates and a confidence level of the first human body rectangle;

a second human body candidate area estimation unit configured to estimate a second human body candidate area from the image, and output the second human body candidate area;
a second partial rectangle estimation unit configured to estimate the specific part corresponding to the human body based on the second human body candidate area, and output coordinates and a confidence level of a second partial rectangle including the part;
a second human body rectangle estimation unit configured to estimate a second human body rectangle including the human body based on the second human body candidate area, and output coordinates and a confidence level of the second human body rectangle; and
a human body integration unit configured to acquire the coordinates and the confidence level of the partial rectangle and the coordinates and the confidence level of the human body rectangle for a plurality of pairs of the partial rectangle and the human body rectangle corresponding to each other, and integrate the human body rectangles overlapping with each other based on an overlap ratio between the partial rectangles and an overlap ratio between the human body rectangles.

(Supplementary note 9)

A human body detection method comprising:

estimating a specific part of a human body from an image, and outputting coordinates and a confidence level of a first partial rectangle including the part;
estimating and outputting a first human body candidate area in which the human body corresponding to the part is predicted to exist, based on the coordinates of the first partial rectangle;
estimating a first human body rectangle including the human body based on the first human body candidate area, and outputting coordinates and a confidence level of the first human body rectangle;
estimating a second human body candidate area from the image, and outputting the second human body candidate area;
estimating the specific part corresponding to the human body based on the second human body candidate area, and outputting coordinates and a confidence level of a second partial rectangle including the part;
estimating a second human body rectangle including the human body based on the second human body candidate area, and outputting coordinates and a confidence level of the second human body rectangle; and
acquiring the coordinates and the confidence level of the partial rectangle and the coordinates and the confidence level of the human body rectangle for a plurality of pairs of the partial rectangle and the human body rectangle corresponding to each other, and integrating the human body rectangles overlapping with each other based on an overlap ratio between the partial rectangles and an overlap ratio between the human body rectangles.

(Supplementary note 10)

A recording medium recording a program, the program causing a computer to execute:

estimating a specific part of a human body from an image, and outputting coordinates and a confidence level of a first partial rectangle including the part;
estimating and outputting a first human body candidate area in which the human body corresponding to the part is predicted to exist, based on the coordinates of the first partial rectangle;
estimating a first human body rectangle including the human body based on the first human body candidate area, and outputting coordinates and a confidence level of the first human body rectangle;
estimating a second human body candidate area from the image, and outputting the second human body candidate area;
estimating the specific part corresponding to the human body based on the second human body candidate area, and outputting coordinates and a confidence level of a second partial rectangle including the part;
estimating a second human body rectangle including the human body based on the second human body candidate area, and outputting coordinates and a confidence level of the second human body rectangle; and
acquiring the coordinates and the confidence level of the partial rectangle and the coordinates and the confidence level of the human body rectangle for a plurality of pairs of the partial rectangle and the human body rectangle corresponding to each other, and integrating the human body rectangles overlapping with each other based on an overlap ratio between the partial rectangles and an overlap ratio between the human body rectangles.

(Supplementary note 11)

A human body detection device comprising:

a partial rectangle estimation unit configured to estimate a specific part of a human body from an image, and output coordinates and a confidence level of a partial rectangle including the part;
a human body center estimation unit configured to estimate a center position of the human body corresponding to the part estimated by the partial rectangle estimation unit;
a human body area estimation unit configured to estimate a human body area based on the coordinates of the partial rectangle and the center position of the human body;
a human body rectangle estimation unit configured to estimate a human body rectangle including the human body from the image, and output coordinates and a confidence level of the human body rectangle;
an integration candidate determination unit configured to determine, as the human body rectangle of integration candidate, the human body rectangle of the lower confidence level among the human body rectangles whose overlap ratio between the human body rectangles is larger than a third threshold; and
a human body rectangle integration unit configured to reject the human body rectangle other than the human body rectangle whose overlap ratio with the human body area is larger than a fourth threshold, among the human body rectangles of integration candidate.

(Supplementary note 12)

A human body detection method comprising:

estimating a specific part of a human body from an image, and outputting coordinates and a confidence level of a partial rectangle including the part;
estimating a center position of the human body corresponding to the part estimated;
estimating a human body area based on the coordinates of the partial rectangle and the center position of the human body;
estimating a human body rectangle including the human body from the image, and outputting coordinates and a confidence level of the human body rectangle;
determining, as the human body rectangle of integration candidate, the human body rectangle of the lower confidence level among the human body rectangles whose overlap ratio between the human body rectangles is larger than a third threshold; and
rejecting the human body rectangle other than the human body rectangle whose overlap ratio with the human body area is larger than a fourth threshold, among the human body rectangles of integration candidate.

(Supplementary note 13)

A recording medium recording a program, the program causing a computer to execute:

estimating a specific part of a human body from an image, and outputting coordinates and a confidence level of a partial rectangle including the part;
estimating a center position of the human body corresponding to the part estimated;
estimating a human body area based on the coordinates of the partial rectangle and the center position of the human body;
estimating a human body rectangle including the human body from the image, and outputting coordinates and a confidence level of the human body rectangle;
determining, as the human body rectangle of integration candidate, the human body rectangle of the lower confidence level among the human body rectangles whose overlap ratio between the human body rectangles is larger than a third threshold; and
rejecting the human body rectangle other than the human body rectangle whose overlap ratio with the human body area is larger than a fourth threshold, among the human body rectangles of integration candidate.

(Supplementary note 14)

A human body detection device comprising:

a partial rectangle estimation unit configured to estimate a specific part of a human body from an image, and output coordinates and a confidence level of a partial rectangle including the part;

a human body rectangle estimation unit configured to estimate a human body rectangle including a human body from the image, and output coordinates and a confidence level of the human body rectangle;

a threshold determination unit configured to determine a fifth threshold based on a number of the partial rectangles;

a threshold determination unit configured to determine a sixth threshold based on a human body area estimated from the partial rectangle;

a threshold determination unit configured to determine a seventh threshold between the fifth threshold and the sixth threshold using the fifth threshold and the sixth threshold; and

a human body rectangle integration unit configured to exclude the human body rectangle of the lower confidence level among the human body rectangles whose overlap ratio is larger than the seventh threshold.

(Supplementary note 15)

A human body detection method comprising:

estimating a specific part of a human body from an image, and outputting coordinates and a confidence level of a partial rectangle including the part;

estimating a human body rectangle including a human body from the image, and outputting coordinates and a confidence level of the human body rectangle;

determining a fifth threshold based on a number of the partial rectangles;

determining a sixth threshold based on a human body area estimated from the partial rectangle;

determining a seventh threshold between the fifth threshold and the sixth threshold using the fifth threshold and the sixth threshold; and

excluding the human body rectangle of the lower confidence level among the human body rectangles whose overlap ratio is larger than the seventh threshold.

(Supplementary note 16)

A recording medium recording a program, the program causing a computer to execute:

estimating a specific part of a human body from an image, and outputting coordinates and a confidence level of a partial rectangle including the part;

estimating a human body rectangle including a human body from the image, and outputting coordinates and a confidence level of the human body rectangle;

determining a fifth threshold based on a number of the partial rectangles;

determining a sixth threshold based on a human body area estimated from the partial rectangle;

determining a seventh threshold between the fifth threshold and the sixth threshold using the fifth threshold and the sixth threshold; and

excluding the human body rectangle of the lower confidence level among the human body rectangles whose overlap ratio is larger than the seventh threshold.

While the present invention has been described with reference to the example embodiments and examples, the present invention is not limited to the above example embodiments and examples. Various changes which can be understood by those skilled in the art within the scope of the present invention can be made in the configuration and details of the present invention.

DESCRIPTION OF SYMBOLS

10, 100, 200, 300, 400, 500 Human body detection device
101, 201, 301, 401, 501 Image storage unit
102, 406 Head rectangle estimation unit
103, 203, 303, 403, 405 Human body candidate area estimation unit
104, 204, 304, 404, 407, 504 Human body rectangle estimation unit
202, 302, 402, 502 Head rectangle and human body center estimation unit
305, 408, 505 Human body rectangle integration unit
503 Human body area estimation unit

**Claims**

1. A human body detection device comprising:

   a partial rectangle estimation unit configured to estimate a specific part of a human body from an image, and output coordinates and a confidence level of a partial rectangle including the part;
   a human body candidate area estimation unit configured to estimate and output a human body candidate area in which the human body corresponding to the part is predicted to exist, based on the coordinates of the partial rectangle; and
   a human body rectangle estimation unit configured to estimate a human body rectangle including the human body based on the human body candidate area, and output coordinates and a confidence level of the human body rectangle.

2. The human body detection device according to claim 1, further comprising a human body center estimation unit configured to estimate a center position of the human body corresponding to the part estimated by the partial rectangle estimation unit,
   wherein the human body candidate area estimation unit estimates the human body candidate area based on the coordinates of the partial rectangle and the center position of the human body.

3. The human body detection device according to claim 2, wherein the human body candidate area estimation unit estimates, as the human body candidate area, a rectangle area of a predetermined aspect ratio including the center position of the human body as its center.

4. The human body detection device according to any one of claims 1 to 3, further comprising a human body integration unit configured to acquire the coordinates and the confidence level of the partial rectangle and the coordinates and the confidence level of the human body rectangle for a plurality of pairs of the partial rectangle and the human body rectangle corresponding to each other, and integrate the human body rectangles overlapping with each other based on an overlap ratio between the partial rectangles and an overlap ratio between the human body rectangles.

5. The human body detection device according to claim 4, wherein, when the overlap ratio between the human body rectangles is larger than a first threshold and the overlap ratio of the partial rectangles is larger than a second threshold, the human body integration unit excludes the human body rectangle for which the confidence level of the partial rectangle is lower.

6. A human body detection method comprising:

   estimating a specific part of a human body from an image, and outputting coordinates and a confidence level of a partial rectangle including the part;
   estimating and outputting a human body candidate area in which the human body corresponding to the part is predicted to exist, based on the coordinates of the partial rectangle; and
   estimating a human body rectangle including the human body based on the human body candidate area, and outputting coordinates and a confidence level of the human body rectangle.

7. A recording medium recording a program, the program causing a computer to execute:

   estimating a specific part of a human body from an image, and outputting coordinates and a confidence level of a partial rectangle including the part;
   estimating and outputting a human body candidate area in which the human body corresponding to the part is predicted to exist, based on the coordinates of the partial rectangle; and
   estimating a human body rectangle including the human body based on the human body candidate area, and outputting coordinates and a confidence level of the human body rectangle.

8. A human body detection device comprising:

   a first partial rectangle estimation unit configured to estimate a specific part of a human body from an image, and output coordinates and a confidence level of a first partial rectangle including the part;
   a first human body candidate area estimation unit configured to estimate and output a first human body candidate area in which the human body corresponding to the part is predicted to exist, based on the coordinates of the first partial rectangle;

a first human body rectangle estimation unit configured to estimate a first human body rectangle including the human body based on the first human body candidate area, and output coordinates and a confidence level of the first human body rectangle;

a second human body candidate area estimation unit configured to estimate a second human body candidate area from the image, and output the second human body candidate area;

a second partial rectangle estimation unit configured to estimate the specific part corresponding to the human body based on the second human body candidate area, and output coordinates and a confidence level of a second partial rectangle including the part;

a second human body rectangle estimation unit configured to estimate a second human body rectangle including the human body based on the second human body candidate area, and output coordinates and a confidence level of the second human body rectangle; and

a human body integration unit configured to acquire the coordinates and the confidence level of the partial rectangle and the coordinates and the confidence level of the human body rectangle for a plurality of pairs of the partial rectangle and the human body rectangle corresponding to each other, and integrate the human body rectangles overlapping with each other based on an overlap ratio between the partial rectangles and an overlap ratio between the human body rectangles.

9. A human body detection method comprising:

estimating a specific part of a human body from an image, and outputting coordinates and a confidence level of a first partial rectangle including the part;

estimating and outputting a first human body candidate area in which the human body corresponding to the part is predicted to exist, based on the coordinates of the first partial rectangle;

estimating a first human body rectangle including the human body based on the first human body candidate area, and outputting coordinates and a confidence level of the first human body rectangle;

estimating a second human body candidate area from the image, and outputting the second human body candidate area;

estimating the specific part corresponding to the human body based on the second human body candidate area, and outputting coordinates and a confidence level of a second partial rectangle including the part;

estimating a second human body rectangle including the human body based on the second human body candidate area, and outputting coordinates and a confidence level of the second human body rectangle; and

acquiring the coordinates and the confidence level of the partial rectangle and the coordinates and the confidence level of the human body rectangle for a plurality of pairs of the partial rectangle and the human body rectangle corresponding to each other, and integrating the human body rectangles overlapping with each other based on an overlap ratio between the partial rectangles and an overlap ratio between the human body rectangles.

10. A recording medium recording a program, the program causing a computer to execute:

estimating a specific part of a human body from an image, and outputting coordinates and a confidence level of a first partial rectangle including the part;

estimating and outputting a first human body candidate area in which the human body corresponding to the part is predicted to exist, based on the coordinates of the first partial rectangle;

estimating a first human body rectangle including the human body based on the first human body candidate area, and outputting coordinates and a confidence level of the first human body rectangle;

estimating a second human body candidate area from the image, and outputting the second human body candidate area;

estimating the specific part corresponding to the human body based on the second human body candidate area, and outputting coordinates and a confidence level of a second partial rectangle including the part;

estimating a second human body rectangle including the human body based on the second human body candidate area, and outputting coordinates and a confidence level of the second human body rectangle; and

acquiring the coordinates and the confidence level of the partial rectangle and the coordinates and the confidence level of the human body rectangle for a plurality of pairs of the partial rectangle and the human body rectangle corresponding to each other, and integrating the human body rectangles overlapping with each other based on an overlap ratio between the partial rectangles and an overlap ratio between the human body rectangles.

11. A human body detection device comprising:

a partial rectangle estimation unit configured to estimate a specific part of a human body from an image, and output coordinates and a confidence level of a partial rectangle including the part;

a human body center estimation unit configured to estimate a center position of the human body corresponding to the part estimated by the partial rectangle estimation unit;

a human body area estimation unit configured to estimate a human body area based on the coordinates of the partial rectangle and the center position of the human body;

a human body rectangle estimation unit configured to estimate a human body rectangle including the human body from the image, and output coordinates and a confidence level of the human body rectangle;

an integration candidate determination unit configured to determine, as the human body rectangle of integration candidate, the human body rectangle of the lower confidence level among the human body rectangles whose overlap ratio between the human body rectangles is larger than a third threshold; and

a human body rectangle integration unit configured to reject the human body rectangle other than the human body rectangle whose overlap ratio with the human body area is larger than a fourth threshold, among the human body rectangles of integration candidate.

12. A human body detection method comprising:

estimating a specific part of a human body from an image, and outputting coordinates and a confidence level of a partial rectangle including the part;

estimating a center position of the human body corresponding to the part estimated;

estimating a human body area based on the coordinates of the partial rectangle and the center position of the human body;

estimating a human body rectangle including the human body from the image, and outputting coordinates and a confidence level of the human body rectangle;

determining, as the human body rectangle of integration candidate, the human body rectangle of the lower confidence level among the human body rectangles whose overlap ratio between the human body rectangles is larger than a third threshold; and

rejecting the human body rectangle other than the human body rectangle whose overlap ratio with the human body area is larger than a fourth threshold, among the human body rectangles of integration candidate.

13. A recording medium recording a program, the program causing a computer to execute:

estimating a specific part of a human body from an image, and outputting coordinates and a confidence level of a partial rectangle including the part;

estimating a center position of the human body corresponding to the part estimated;

estimating a human body area based on the coordinates of the partial rectangle and the center position of the human body;

estimating a human body rectangle including the human body from the image, and outputting coordinates and a confidence level of the human body rectangle;

determining, as the human body rectangle of integration candidate, the human body rectangle of the lower confidence level among the human body rectangles whose overlap ratio between the human body rectangles is larger than a third threshold; and

rejecting the human body rectangle other than the human body rectangle whose overlap ratio with the human body area is larger than a fourth threshold, among the human body rectangles of integration candidate.

14. A human body detection device comprising:

a partial rectangle estimation unit configured to estimate a specific part of a human body from an image, and output coordinates and a confidence level of a partial rectangle including the part;

a human body rectangle estimation unit configured to estimate a human body rectangle including a human body from the image, and output coordinates and a confidence level of the human body rectangle;

a threshold determination unit configured to determine a fifth threshold based on a number of the partial rectangles;

a threshold determination unit configured to determine a sixth threshold based on a human body area estimated from the partial rectangle;

a threshold determination unit configured to determine a seventh threshold between the fifth threshold and the sixth threshold using the fifth threshold and the sixth threshold; and

a human body rectangle integration unit configured to exclude the human body rectangle of the lower confidence level among the human body rectangles whose overlap ratio is larger than the seventh threshold.

15. A human body detection method comprising:

estimating a specific part of a human body from an image, and outputting coordinates and a confidence level of a partial rectangle including the part;
estimating a human body rectangle including a human body from the image, and outputting coordinates and a confidence level of the human body rectangle;
determining a fifth threshold based on a number of the partial rectangles;
determining a sixth threshold based on a human body area estimated from the partial rectangle;
determining a seventh threshold between the fifth threshold and the sixth threshold using the fifth threshold and the sixth threshold; and
excluding the human body rectangle of the lower confidence level among the human body rectangles whose overlap ratio is larger than the seventh threshold.

16. A recording medium recording a program, the program causing a computer to execute:

estimating a specific part of a human body from an image, and outputting coordinates and a confidence level of a partial rectangle including the part;
estimating a human body rectangle including a human body from the image, and outputting coordinates and a confidence level of the human body rectangle;
determining a fifth threshold based on a number of the partial rectangles;
determining a sixth threshold based on a human body area estimated from the partial rectangle;
determining a seventh threshold between the fifth threshold and the sixth threshold using the fifth threshold and the sixth threshold; and
excluding the human body rectangle of the lower confidence level among the human body rectangles whose overlap ratio is larger than the seventh threshold.

**Amended claims in accordance with Rule 137(2) EPC.**

1. A human body detection device comprising:

a partial rectangle estimation unit configured to estimate a specific part of a human body from an image, and output coordinates and a confidence level of a partial rectangle including the part;
a human body candidate area estimation unit configured to estimate and output a human body candidate area in which the human body corresponding to the part is predicted to exist, based on the coordinates of the partial rectangle; and
a human body rectangle estimation unit configured to estimate a human body rectangle including the human body based on the human body candidate area, and output coordinates and a confidence level of the human body rectangle.

2. The human body detection device according to claim 1, further comprising a human body center estimation unit configured to estimate a center position of the human body corresponding to the part estimated by the partial rectangle estimation unit,
wherein the human body candidate area estimation unit estimates the human body candidate area based on the coordinates of the partial rectangle and the center position of the human body.

3. The human body detection device according to claim 2, wherein the human body candidate area estimation unit estimates, as the human body candidate area, a rectangle area of a predetermined aspect ratio including the center position of the human body as its center.

4. The human body detection device according to any one of claims 1 to 3, further comprising a human body integration unit configured to acquire the coordinates and the confidence level of the partial rectangle and the coordinates and the confidence level of the human body rectangle for a plurality of pairs of the partial rectangle and the human body rectangle corresponding to each other, and integrate the human body rectangles overlapping with each other based on an overlap ratio between the partial rectangles and an overlap ratio between the human body rectangles.

5. The human body detection device according to claim 4, wherein, when the overlap ratio between the human body rectangles is larger than a first threshold and the overlap ratio of the partial rectangles is larger than a second threshold, the human body integration unit excludes the human body rectangle for which the confidence level of the partial rectangle is lower.

6. A human body detection method comprising:

   estimating a specific part of a human body from an image, and outputting coordinates and a confidence level of a partial rectangle including the part;
   estimating and outputting a human body candidate area in which the human body corresponding to the part is predicted to exist, based on the coordinates of the partial rectangle; and
   estimating a human body rectangle including the human body based on the human body candidate area, and outputting coordinates and a confidence level of the human body rectangle.

7. A recording medium recording a program, the program causing a computer to execute:

   estimating a specific part of a human body from an image, and outputting coordinates and a confidence level of a partial rectangle including the part;
   estimating and outputting a human body candidate area in which the human body corresponding to the part is predicted to exist, based on the coordinates of the partial rectangle; and
   estimating a human body rectangle including the human body based on the human body candidate area, and outputting coordinates and a confidence level of the human body rectangle.

8. A human body detection device comprising:

   a first partial rectangle estimation unit configured to estimate a specific part of a human body from an image, and output coordinates and a confidence level of a first partial rectangle including the part;
   a first human body candidate area estimation unit configured to estimate and output a first human body candidate area in which the human body corresponding to the part is predicted to exist, based on the coordinates of the first partial rectangle;
   a first human body rectangle estimation unit configured to estimate a first human body rectangle including the human body based on the first human body candidate area, and output coordinates and a confidence level of the first human body rectangle;
   a second human body candidate area estimation unit configured to estimate a second human body candidate area from the image, and output the second human body candidate area;
   a second partial rectangle estimation unit configured to estimate the specific part corresponding to the human body based on the second human body candidate area, and output coordinates and a confidence level of a second partial rectangle including the part;
   a second human body rectangle estimation unit configured to estimate a second human body rectangle including the human body based on the second human body candidate area, and output coordinates and a confidence level of the second human body rectangle; and
   a human body integration unit configured to acquire the coordinates and the confidence level of the partial rectangle and the coordinates and the confidence level of the human body rectangle for a plurality of pairs of the partial rectangle and the human body rectangle corresponding to each other, and integrate the human body rectangles overlapping with each other based on an overlap ratio between the partial rectangles and an overlap ratio between the human body rectangles.

9. A human body detection method comprising:

   estimating a specific part of a human body from an image, and outputting coordinates and a confidence level of a first partial rectangle including the part;
   estimating and outputting a first human body candidate area in which the human body corresponding to the part is predicted to exist, based on the coordinates of the first partial rectangle;
   estimating a first human body rectangle including the human body based on the first human body candidate area, and outputting coordinates and a confidence level of the first human body rectangle;
   estimating a second human body candidate area from the image, and outputting the second human body candidate area;
   estimating the specific part corresponding to the human body based on the second human body candidate area, and outputting coordinates and a confidence level of a second partial rectangle including the part;
estimating a second human body rectangle including the human body based on the second human body candidate area, and outputting coordinates and a confidence level of the second human body rectangle; and acquiring the coordinates and the confidence level of the partial rectangle and the coordinates and the confidence level of the human body rectangle for a plurality of pairs of the partial rectangle and the human body rectangle corresponding to each other, and integrating the human body rectangles overlapping with each other based on an overlap ratio between the partial rectangles and an overlap ratio between the human body rectangles.

10. A recording medium recording a program, the program causing a computer to execute:

estimating a specific part of a human body from an image, and outputting coordinates and a confidence level of a first partial rectangle including the part;
estimating and outputting a first human body candidate area in which the human body corresponding to the part is predicted to exist, based on the coordinates of the first partial rectangle;
estimating a first human body rectangle including the human body based on the first human body candidate area, and outputting coordinates and a confidence level of the first human body rectangle;
estimating a second human body candidate area from the image, and outputting the second human body candidate area;
estimating the specific part corresponding to the human body based on the second human body candidate area, and outputting coordinates and a confidence level of a second partial rectangle including the part;
estimating a second human body rectangle including the human body based on the second human body candidate area, and outputting coordinates and a confidence level of the second human body rectangle; and acquiring the coordinates and the confidence level of the partial rectangle and the coordinates and the confidence level of the human body rectangle for a plurality of pairs of the partial rectangle and the human body rectangle corresponding to each other, and integrating the human body rectangles overlapping with each other based on an overlap ratio between the partial rectangles and an overlap ratio between the human body rectangles.

11. A human body detection device comprising:

a partial rectangle estimation unit configured to estimate a specific part of a human body from an image, and output coordinates and a confidence level of a partial rectangle including the part;
a human body center estimation unit configured to estimate a center position of the human body corresponding to the part estimated by the partial rectangle estimation unit;
a human body area estimation unit configured to estimate a human body area based on the coordinates of the partial rectangle and the center position of the human body;
a human body rectangle estimation unit configured to estimate a human body rectangle including the human body from the image, and output coordinates and a confidence level of the human body rectangle;
an integration candidate determination unit configured to determine, as the human body rectangle of integration candidate, the human body rectangle of the lower confidence level among the human body rectangles whose overlap ratio between the human body rectangles is larger than a third threshold; and
a human body rectangle integration unit configured to reject the human body rectangle other than the human body rectangle whose overlap ratio with the human body area is larger than a fourth threshold, among the human body rectangles of integration candidate.

12. A human body detection method comprising:

estimating a specific part of a human body from an image, and outputting coordinates and a confidence level of a partial rectangle including the part;
estimating a center position of the human body corresponding to the part estimated;
estimating a human body area based on the coordinates of the partial rectangle and the center position of the human body;
estimating a human body rectangle including the human body from the image, and outputting coordinates and a confidence level of the human body rectangle;
determining, as the human body rectangle of integration candidate, the human body rectangle of the lower confidence level among the human body rectangles whose overlap ratio between the human body rectangles is larger than a third threshold; and
rejecting the human body rectangle other than the human body rectangle whose overlap ratio with the human body area is larger than a fourth threshold, among the human body rectangles of integration candidate.

**13.** A recording medium recording a program, the program causing a computer to execute:

estimating a specific part of a human body from an image, and outputting coordinates and a confidence level of a partial rectangle including the part;
estimating a center position of the human body corresponding to the part estimated;
estimating a human body area based on the coordinates of the partial rectangle and the center position of the human body;
estimating a human body rectangle including the human body from the image, and outputting coordinates and a confidence level of the human body rectangle;
determining, as the human body rectangle of integration candidate, the human body rectangle of the lower confidence level among the human body rectangles whose overlap ratio between the human body rectangles is larger than a third threshold; and
rejecting the human body rectangle other than the human body rectangle whose overlap ratio with the human body area is larger than a fourth threshold, among the human body rectangles of integration candidate.

**14.** A human body detection device comprising:

a partial rectangle estimation unit configured to estimate a specific part of a human body from an image, and output coordinates and a confidence level of a partial rectangle including the part;
a human body rectangle estimation unit configured to estimate a human body rectangle including a human body from the image, and output coordinates and a confidence level of the human body rectangle;
a threshold determination unit configured to determine a fifth threshold based on a number of the partial rectangles;
a threshold determination unit configured to determine a sixth threshold based on a human body area estimated from the partial rectangle;
a threshold determination unit configured to determine a seventh threshold between the fifth threshold and the sixth threshold using the fifth threshold and the sixth threshold; and
a human body rectangle integration unit configured to exclude the human body rectangle of the lower confidence level among the human body rectangles whose overlap ratio is larger than the seventh threshold.

**15.** A human body detection method comprising:

estimating a specific part of a human body from an image, and outputting coordinates and a confidence level of a partial rectangle including the part;
estimating a human body rectangle including a human body from the image, and outputting coordinates and a confidence level of the human body rectangle;
determining a fifth threshold based on a number of the partial rectangles;
determining a sixth threshold based on a human body area estimated from the partial rectangle;
determining a seventh threshold between the fifth threshold and the sixth threshold using the fifth threshold and the sixth threshold; and
excluding the human body rectangle of the lower confidence level among the human body rectangles whose overlap ratio is larger than the seventh threshold.

**16.** A recording medium recording a program, the program causing a computer to execute:

estimating a specific part of a human body from an image, and outputting coordinates and a confidence level of a partial rectangle including the part;
estimating a human body rectangle including a human body from the image, and outputting coordinates and a confidence level of the human body rectangle;
determining a fifth threshold based on a number of the partial rectangles;
determining a sixth threshold based on a human body area estimated from the partial rectangle;
determining a seventh threshold between the fifth threshold and the sixth threshold using the fifth threshold and the sixth threshold; and
excluding the human body rectangle of the lower confidence level among the human body rectangles whose overlap ratio is larger than the seventh threshold.

**17.** (New) An object detection device comprising

a threshold determination means for determing a threshold relating to a confidence level of a detection result of an object based on an IoU value associated with a first part of the object and an IoU value associated with a second part of the object; and
an integration means for integrating areas of plural objects when an overlapping ratio between areas of the plural objects is larger than the threshold.

18. (New) An object detection method comprising:

determining a threshold relating to a confidence level of a detection result of an object based on an IoU value associated with a first part of the object and an IoU value associated with a second part of the object; and
integrating areas of plural objects when an overlapping ratio between areas of the plural objects is larger than the threshold.

19. (New) A recording medium, which records a program causing a computer to execute:

determining a threshold relating to a confidence level of a detection result of an object based on an IoU value associated with a first part of the object and an IoU value associated with a second part of the object; and
integrating areas of plural objects when an overlapping ratio between areas of the plural objects is larger than the threshold.

EP 4 089 629 A1

FIG. 1

FIG. 2

HUMAN BODY RECTANGLE COORDINATES、
HUMAN BODY CONFIDENCE LEVELS

## FIG. 3

$$H \times W \qquad h \times w$$

## FIG. 4

$(x-w_H,y)$ $(x,y)$ $w_H$

$h_H$

$3w_H/0.4$

$3w_H$

FIG. 5

Deep
ConvNet

ROI
projection

r,c,
w,h

CONVOLUTION
FEATURE MAP

<FIRST EXAMPLE EMBODIMENT>

FIG. 6

START

S11

ESTIMATE
HEAD RECTANGLES

S12

ESTIMATE HUMAN BODY
CANDIDATE AREAS

S13

ESTIMATE HUMAN BODY
RECTANGLES

END

200

FIG. 7

HUMAN BODY RECTANGLE COORDINATES、
HUMAN BODY CONFIDENCE LEVELS

<SECOND EXAMPLE EMBODIMENT>

FIG. 8

EP 4 089 629 A1

# FIG. 9A

(NORMAL NMS)

CONFIDENCE LEVEL 0.7

CALCULATE
OVERLAP RATIO OF
HUMAN BODY AREAS

RECTANGLE HAVING
HIGHER CONFIDENCE
LEVEL REMAINS

CONFIDENCE LEVEL 0.9

CONFIDENCE LEVEL 0.9

# FIG. 9B

(METHOD OF EXAMPLE
EMBODIMENT)

CALCULATE
OVERLAP RATIO OF
HUMAN BODY AREAS

DO NOT INTEGRATE
BECAUSE OVERLAP
RATIO OF HEAD AREAS
IS SMALL

CALCULATE
OVERLAP RATIO
OF HEAD AREAS

# FIG. 10

300

```
┌─────────────────────┐
│  IMAGE STORAGE      │  ⟋ 301
│      UNIT           │
└─────────────────────┘
          │
          ▼
┌─────────────────────┐
│ HEAD RECTANGLE AND HUMAN │  ⟋ 302
│ BODY CENTER ESTIMATION UNIT │
└─────────────────────┘
          │
          ▼
┌─────────────────────┐
│ HUMAN BODY CANDIDATE AREA │  ⟋ 303
│   ESTIMATION UNIT    │
└─────────────────────┘
          │
          ▼
┌─────────────────────┐
│  HUMAN BODY RECTANGLE │  ⟋ 304
│   ESTIMATION UNIT    │
└─────────────────────┘
          │
          ▼
┌─────────────────────┐
│  HUMAN BODY RECTANGLE │  ⟋ 305
│  INTEGRATION UNIT    │
└─────────────────────┘
          │
          ▼
```

HUMAN BODY RECTANGLE COORDINATES、
HUMAN BODY CONFIDENCE LEVELS

# FIG. 11

<THIRD EXAMPLE EMBODIMENT>

```
        ┌──────────────┐
        │    START     │
        └──────────────┘
                │
                ▼           S31
   ┌────────────────────────────┐
   │  ESTIMATE HEAD RECTANGLES,  │
   │      CENTER POSITIONS       │
   │       OF HUMAN BODIES       │
   └────────────────────────────┘
                │
                ▼           S32
   ┌────────────────────────────┐
   │    ESTIMATE HUMAN BODY      │
   │      CANDIDATE AREAS        │
   └────────────────────────────┘
                │
                ▼           S33
   ┌────────────────────────────┐
   │    ESTIMATE HUMAN BODY      │
   │         RECTANGLES          │
   └────────────────────────────┘
                │
                ▼           S34
   ┌────────────────────────────┐
   │  HUMAN BODY RECTANGLE       │
   │  INTEGRATION PROCESSING     │
   └────────────────────────────┘
                │
                ▼
        ┌──────────────┐
        │     END      │
        └──────────────┘
```

# FIG. 12

```
        ┌─────────────────────────┐
        │  HUMAN BODY RECTANGLE   │
        │  INTEGRATION PROCESSING │
        └─────────────────────────┘
                     │
                     ▼                    S301
        ╱─────────────────────────╲            No
       ╱    HEAD-HUMAN BODY PAIR    ╲──────────────────┐
       ╲   EXIST IN UNPROCESSED LIST?╱                 │
        ╲─────────────────────────╱                    │
                     │ Yes                              │
                     ▼            S302           S309   │
        ┌─────────────────────────┐     ┌─────────────────────────┐
        │  EXTRACT PAIR OF HIGHEST HUMAN  │     │   OUTPUT HUMAN BODY     │
        │  BODY CONFIDENCE LEVEL, PUT IT IN│    │  RECTANGLE COORDINATES &│
        │  PROCESSED LIST, AND DELETE IT  │     │ HUMAN BODY CONFIDENCE LEVEL│
        │  FROM UNPROCESSED LIST          │     │    AFTER INTEGRATION    │
        └─────────────────────────┘     └─────────────────────────┘
                     │                               │
                     ▼            S303                ▼
        ┌─────────────────────────┐     ┌─────────────────────────┐
        │     SELECT ONE PAIR      │     │        RETURN           │
        │   IN UNPROCESSED LIST    │     └─────────────────────────┘
        └─────────────────────────┘
                     │            S304
                     ▼
        ┌─────────────────────────┐
        │ CALCULATE OVERLAP RATIO OF HEAD │
        │  RECTANGLES AND HUMAN BODY     │
        │  RECTANGLES BETWEEN PAIRS      │
        └─────────────────────────┘
                     │            S305
                     ▼
        ╱─────────────────────────╲         No
       ╱   OVERLAP RATIO OF HUMAN BODY ╲──────────►
       ╲   RECTANGLES >HUMAN BODY      ╱
        ╲       THRESHOLD             ╱
         ╲───────────────────────────╱
                     │ Yes
                     ▼            S306
        ╱─────────────────────────╲         No
       ╱    OVERLAP RATIO OF HEAD   ╲──────────►
       ╲  RECTANGLES>HEAD THRESHOLD? ╱
        ╲─────────────────────────╱
                     │ Yes
                     ▼            S307
        ┌─────────────────────────┐
        │  REMOVE PAIR HAVING LOWER HEAD │
        │   CONFIDENCE LEVEL FROM        │
        │      UNPROCESSED LIST          │
        └─────────────────────────┘
                     │            S308
                     ▼
        ╱─────────────────────────╲  No
  Yes  ╱  ALL PAIRS IN UNPROCESSED LIST╲───►
       ╲        PROCESSED?         ╱
        ╲─────────────────────────╱
```

# FIG. 13

400

IMAGE STORAGE UNIT — 401

HEAD RECTANGLE & HUMAN BODY CENTER ESTIMATION UNIT — 402

HUMAN BODY CANDIDATE AREA ESTIMATION UNIT — 405

HUMAN BODY CANDIDATE AREA ESTIMATION UNIT — 403

HEAD RECTANGLE ESTIMATION UNIT — 406

HUMAN BODY RECTANGLE ESTIMATION UNIT — 404

HUMAN BODY RECTANGLE ESTIMATION UNIT — 407

HUMAN BODY RECTANGLE INTEGRATION UNIT — 408

HUMAN BODY RECTANGLE COORDINATES, HUMAN BODY CONFIDENCE LEVELS

# FIG. 14

<FOURTH EXAMPLE EMBODIMENT>

```
┌──────────────┐
│    START     │
└──────────────┘
       │
       ▼              S41
┌────────────────────────────────┐
│ ESTIMATE HEAD RECTANGLES &     │
│ HUMAN BODY CENTER POSITIONS    │
│ FROM IMAGE                     │
└────────────────────────────────┘
       │
       ▼              S42
┌────────────────────────────────┐
│ ESTIMATE HUMAN BODY CANDIDATE  │
│ AREAS FROM HEAD RECTANGLES &   │
│ HUMAN BODY CENTER POSITIONS    │
└────────────────────────────────┘
       │
       ▼              S43
┌────────────────────────────────┐
│ ESTIMATE HUMAN BODY RECTANGLES │
│ FROM HUMAN BODY CANDIDATE AREAS│
└────────────────────────────────┘
       │
       ▼              S44
┌────────────────────────────────┐
│ ESTIMATE HUMAN BODY CANDIDATE  │
│ AREAS & HEAD CENTER POSITIONS  │
│ FROM IMAGE                     │
└────────────────────────────────┘
       │
       ▼              S45
┌────────────────────────────────┐
│ ESTIMATE HEAD RECTANGLES FROM  │
│ HUMAN BODY CANDIDATE AREAS     │
│ & HEAD CENTER POSITIONS        │
└────────────────────────────────┘
       │
       ▼              S46
┌────────────────────────────────┐
│ ESTIMATE HUMAN BODY RECTANGLES │
│ FROM HUMAN BODY CANDIDATE AREAS│
└────────────────────────────────┘
       │
       ▼              S47
┌────────────────────────────────┐
│ HUMAN BODY RECTANGLE           │
│ INTEGRATION PROCESSING         │
└────────────────────────────────┘
       │
       ▼
┌──────────────┐
│     END      │
└──────────────┘
```

# FIG. 15

<u>500</u>

IMAGE
STORAGE UNIT — 501

HEAD RECTANGLE &
HUMAN BODY CENTER
ESTIMATION UNIT — 502

HUMAN BODY RECTANGLE
ESTIMATION UNIT — 504

HUMAN BODY AREA
ESTIMATION UNIT — 503

HUMAN BODY RECTANGLE
INTEGRATION UNIT — 505

HUMAN BODY RECTANGLE COORDINATES、
HUMAN BODY CONFIDENCE LEVELS

# FIG. 16

<FIFTH EXAMPLE EMBODIMENT>

```
        ┌─────────────────┐
        │     START       │
        └─────────────────┘
                 │
                 │            S51
                 ▼
   ┌──────────────────────────────┐
   │   ESTIMATE HEAD RECTANGLES    │
   │         FROM IMAGE            │
   └──────────────────────────────┘
                 │
                 │            S52
                 ▼
   ┌──────────────────────────────┐
   │   ESTIMATE HUMAN BODY AREAS   │
   │     FROM HEAD RECTANGLES      │
   └──────────────────────────────┘
                 │
                 │            S53
                 ▼
   ┌──────────────────────────────┐
   │ ESTIMATE HUMAN BODY RECTANGLES│
   │          FROM IMAGE           │
   └──────────────────────────────┘
                 │
                 │            S54
                 ▼
   ┌──────────────────────────────┐
   │  INTEGRATE HUMAN BODY RECTANGLES│
   └──────────────────────────────┘
                 │
                 ▼
        ┌─────────────────┐
        │      END        │
        └─────────────────┘
```

# FIG. 17

600

601
IMAGE
STORAGE UNIT

603
HUMAN BODY
RECTANGLE
ESTIMATION UNIT

602
HEAD RECTANGLE
ESTIMATION UNIT

605
HUMAN BODY AREA
ESTIMATION UNIT

604
THRESHOLD
DETERMINATION UNIT

606
THRESHOLD
DETERMINATION UNIT

607
THRESHOLD
DETERMINATION UNIT

608
HUMAN BODY
RECTANGLE
INTEGRATION UNIT

HUMAN BODY RECTANGLE COORDINATES、
HUMAN BODY CONFIDENCE LEVEL

# FIG. 18

<SIXTH EXAMPLE EMBODIMENT>

```
                    START

                                        S61
          ESTIMATE HEAD RECTANGLES
               FROM IMAGE

                                        S62
          ESTIMATE HUMAN BODY AREAS
            FROM HEAD RECTANGLES

                                        S63
         DETERMINE FIRST IoU THRESHOLD
              FROM HEAD RECTANGLES
            & HUMAN BODY RECTANGLES

                                        S64
          ESTIMATE HUMAN BODY AREAS
            FROM HEAD RECTANGLES

                                        S65
         DETERMINE SECOND IoU THRESHOLD
            FROM HUMAN BODY AREAS

                                        S66
       DETERMINE THIRD IoU THRESHOLD FROM
         FIRST AND SECOND IoU THRESHOLDS

                                        S67
        INTEGRATE HUMAN BODY RECTANGLES
             USING THIRD IoU THRESHOLD

                     END
```

**INTERNATIONAL SEARCH REPORT**

| International application No. |
| --- |
| PCT/JP2020/000298 |

A.  CLASSIFICATION OF SUBJECT MATTER
Int. Cl. G06T7/00(2017.01)i
FI: G06T7/00 660B, G06T7/00 350C

According to International Patent Classification (IPC) or to both national classification and IPC

B.  FIELDS SEARCHED

Minimum documentation searched (classification system followed by classification symbols)
Int. Cl. G06T7/00

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2011-130328 A (SONY CORP.) 30 June 2011, paragraphs [0048]-[0081], fig. 4-9 | 1-3, 6, 7 |
| Y | | 4, 5, 8-13 |
| A | | 14-16 |
| Y | JP 2018-106282 A (SECOM CO., LTD.) 05 July 2018, paragraphs [0017]-[0099], [0119], [0120], fig. 1-6 | 4, 5, 8-13 |
| A | JP 2014-21602 A (CANON INC.) 03 February 2014, entire text, all drawings | 1-16 |
| A | JP 2013-210967 A (CANON INC.) 10 October 2013, paragraphs [0011]-[0070], fig. 1-7 | 1-16 |

☐  Further documents are listed in the continuation of Box C.　　☒  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 31.03.2020 | 07.04.2020 |

| Name and mailing address of the ISA/<br>　Japan Patent Office<br>　3-4-3, Kasumigaseki, Chiyoda-ku,<br>　Tokyo 100-8915, Japan | Authorized officer<br><br>Telephone No. |
| --- | --- |

Form PCT/ISA/210 (second sheet) (January 2015)

INTERNATIONAL SEARCH REPORT

Information on patent family members

International application No.

PCT/JP2020/000298

| Patent Documents referred to in the Report | Publication Date | Patent Family | Publication Date |
|---|---|---|---|
| JP 2011-130328 A | 30.06.2011 | (Family: none) | |
| JP 2018-106282 A | 05.07.2018 | (Family: none) | |
| JP 2014-21602 A | 03.02.2014 | (Family: none) | |
| JP 2013-210967 A | 10.10.2013 | US 2013/0259310 A1 paragraphs [0027]-[0085], fig. 1-7 CN 103366171 A | |

Form PCT/ISA/210 (patent family annex) (January 2015)

## REFERENCES CITED IN THE DESCRIPTION

**Patent documents cited in the description**

- JP 2018088049 A

**Non-patent literature cited in the description**

- **REN, SHAOQUING et al.** Faster r-cnn: Towards real-time object detection with area proposal networks. *Advances in neural information processing systems,* 2015